(19) Europäisches Patentamt
European Patent Office
Office européen des brevets

(11) **EP 3 447 896 B1**

(12) **EUROPEAN PATENT SPECIFICATION**

(45) Date of publication and mention
of the grant of the patent:
**12.08.2020 Bulletin 2020/33**

(21) Application number: **18199723.0**

(22) Date of filing: **23.11.2011**

(51) Int Cl.:
*H02M 5/257* (2006.01)   *H02M 1/08* (2006.01)
*H02P 25/04* (2006.01)   *H02P 1/42* (2006.01)
*H02P 1/44* (2006.01)   *H02P 29/02* (2016.01)
*H02H 7/08* (2006.01)   *F25B 49/02* (2006.01)

(54) **MOTOR CONTROL SYSTEMS**

MOTORSTEUERUNGSSYSTEME

SYSTÈMES DE COMMANDE DE MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2010 GB 201020258**

(43) Date of publication of application:
**27.02.2019 Bulletin 2019/09**

(62) Document number(s) of the earlier application(s) in
accordance with Art. 76 EPC:
**11190327.4 / 2 458 728**

(73) Proprietor: **B.D.G. el S.r.l.**
**21020 Bardello (IT)**

(72) Inventors:
• **Ryan, Paul Thomas**
**Huntingdon, Cambridgeshire PE28 4AQ (GB)**
• **Mazzani, Luigi**
**21020 Varese (IT)**

(74) Representative: **Martin, Philip John**
**Marks & Clerk LLP**
**62-68 Hills Road**
**Cambridge**
**CB2 1LA (GB)**

(56) References cited:
**DE-A1- 10 062 940     GB-A- 2 120 877**
**US-A- 4 658 195      US-A- 5 051 681**
**US-A- 5 808 441      US-A- 6 034 503**

**Description**

FIELD OF THE INVENTION

This invention relates to the field of starting of induction motors that operate from single phase AC voltage and more particularly induction motors which have a main or run winding that is powered during all of the running time of the motor and a starting or auxiliary winding that is powered to start the motor, or is powered at a higher level during starting compared to the power level during running. More particularly it relates to such motors used to operate compressors for refrigeration (including freezers).

BACKGROUND TO THE INVENTION

Induction motors are well known and widely used. When operating from multiphase (e.g. 3 phase) supplies they can be started easily because the phase differences of the supply generate the rotating magnetic field that is necessary to start the motor. When operating from single phase supplies, some method is needed to generate a phase difference between currents in windings of the motor or other means to achieve a rotating magnetic field. Among the known techniques is "resistance starting". In this method, the motor is typically provided with two stator windings, a "main" or "run" winding that is permanently energised by AC voltage during running, and a "start" or "auxiliary" winding that is energised at a high level to start the motor then is unpowered, or powered at a low level during running.

These windings are wound on the stator typically with their magnetic axes at 90° and they are wound with different numbers of turns and gauge of wire. In addition, the Auxiliary winding may be powered from the AC voltage via a resistive component. By choosing the value of any external resistance and the numbers of turns and gauges of the wires of the two windings, it is possible to achieve sufficient phase difference between the currents in the two windings to generate sufficient effective rotation of the net magnetic field to start the motor. Typically the main winding is wound from thick wire of many turns so it has a low resistance and a large inductance (when the motor is stationary) whereas the Auxiliary winding is made from fewer turns of thinner wire so has a lower inductance and higher resistance. When activated by AC voltage, the phase of the current in each winding depends on the ratio of its inductance to the total circuit resistance (winding inductance plus any external series inductance) so the relatively higher inductance to resistance of the main winding causes the current in the main winding to lag in relation to current in the starting winding. This phase difference of current, though less than 90°, causes the net magnetic field to have a rotating component which starts the motor.

The motor accelerates in response to the rotating magnetic field, reaching a stable condition of rotation speed while the Main and Auxiliary windings are both energised. In this condition the rotation of the magnetic field is an imperfect match to the rotation of the rotor. Particularly, the rotation and amplitude of the rotor magnetisation does not match well to the main winding in relation to the applied AC voltage. Hence there is a significant current in the main winding. If the current in the Auxiliary winding is disconnected, and assuming that the motor has a low shaft load torque, the motor typically increases in speed to the normal operating speed. In this condition there is a better match between the rotating rotor flux and the flux from the Main winding, hence the current in the Main winding reduces.

During normal running AC voltage is applied to the Main winding and this connection provides most of the power to operate the motor. Optionally, a current can be applied to the Auxiliary winding via a "run capacitor" from the AC voltage source. Using a capacitor in this connection provides a large phase shift between the current in the Main winding and the current in the Auxiliary winding. This large phase difference ensures that the auxiliary winding current increases the available torque and overall efficiency of the motor, as explained in US5808441.

If an increasing mechanical load is applied to the motor, the rotor slows relative to the frequency of the AC mains supply (there is more "slip" between the rotor and the effective magnetic field from the stator). As slip increases, so does the current (and power) taken by the Main winding from the AC voltage source.

Motors are typically designed to provide sufficient torque for the maximum expected duty and to optimise efficiency (mechanical output power in relation to the electrical input power). However typical applications rarely operate motors at their maximum available output torque, often they are operated a small fraction of the available torque for most of their operating time and it is under these conditions that the efficiency is most important. In most applications there are other important factors such as minimising manufacturing cost and the overall size/weight of the motor. For a given size or cost the optimum design for a maximum output mechanical output power is usually different for the optimum design for maximum efficiency at part load. The consequence is often that reduced motor efficiency has to be accepted within the constraints of size, cost and required maximum output power.

A conventional method to start motors of this type is to include a thermistor with positive temperature coefficient ("PTC") in series with the Auxiliary winding and the AC voltage source. The PTC is cold before starting, so has a relatively low resistance. This allows a high current to flow in the Auxiliary winding but also the resistance of the PTC adds to that of the winding to increase the phase difference between Main and Auxiliary winding current. The large current flowing through the resistance of the PTC causes it to heat, after a time reaching a switching temperature above which the resistance rises rapidly. The effect is that the current in the winding is maintained for a short time (0.5-5s) then rapidly reduces. The PTC stabilises at a high temperature where the power dissipated in the high resistance of the PTC balances the heat power lost from the PTC (typically about 2W). The current flow in this condition is low so the Auxiliary winding is effectively unpowered from the AC supply.

In addition to a starting device, it is typical to use an overload protector (OLP) with such motors. A conventional type uses a combination of a low-resistance heater and an over-temperature switch (bimetal, with contacts). The heater and switch are both connected in series with the AC supply and the motor so that the motor current flows through the resistance heater and the supply is interrupted if the switch opens due to high temperature. It is located close to the motor so that a high motor temperature promotes tripping. This arrangement is sensitive to current and temperature and it is designed to give a particular characteristic of tripping current and tripping time that varies with motor temperature. So it disconnects power if the motor is cold but takes a large current for longer than a particular time or if the motor takes a moderate current for a long time but is running at a high temperature. This protects against conditions that could cause overheating of the motor windings.

It is also known to protect against overheating of motor windings by using an electronic overload protector system, such as described in EP1494346. Alternative solutions are provided in GB2120877 by counting the number of motor starts per unit of time, and in DE10062940 by determining an average input power based on a power amount related to a time interval of maximum efficiency and a power amount related to a time interval of maximum torque.

It is important to reduce energy consumption and one target is the power dissipated in the PTC to keep it hot during normal running of the motor. One method to reduce the power is to replace the PTC by a "starting relay" where the current in the Main winding passes through a coil in the relay. The high current in the main winding causes contacts in the relay to close, applying power to the Auxiliary winding. When the motor is running the lower current in the Main winding is not sufficient to keep the contacts closed so they open to disconnect power from the Auxiliary winding. Though it is effective, it lacks design flexibility and has several disadvantages. For example, the Auxiliary winding must have high resistance to achieve the necessary phase difference in current to start the motor, which causes waste of power particularly if the motor is used with a run capacitor.

One method to reduce power consumption of the PTC is to insert a switch in series with the PTC so that it can be disconnected after the motor has started, as described in EPO 820 621A. However it is desirable to improve upon this approach.

Energy efficiency: In applications where the induction motor is used to operate a refrigeration compressor, it is normally activated and deactivated by a thermostat so that a cooled compartment is stabilised around a predetermined temperature. Such thermostats are well known and typically include hysteresis (differential on/off switching temperatures). This is arranged so the motor is started when the compartment temperature rises above an upper temperature threshold and the motor is switched off when the refrigeration system has brought the temperature below a lower threshold. Usually the thermostat function is embodied as a device separate from the motor or any control directly associated with the motor. This is convenient when the cooled zone or compartment is remote from the motor. In self-contained (e.g. domestic) refrigerators the functions of motor control function and thermostat are also usually separated even though the cooled compartment is near the motor. This is because the technology of the thermostat is different from that of the motor control and there is little commercial benefit (e.g. lower cost of manufacture) if they are combined. However it is desirable to reduce the total number and cost of components in a refrigerator and any possible additional energy saving is a valued benefit. So it is desirable integrate a thermostat with a motor control if technology and devices can be devised to give a lower overall cost or other advantages, such as lower energy consumption.

The energy used to operate refrigeration systems is an important characteristic and much effort has been directed at minimising it. It has been found, for example, that faster on/off cycling can give a saving of energy consumption: INFLUENZA DEL FUNZIONAMENTO CICLICO SUL CONSUMO DELLE APPARECCHIATURE FRIGORIFERE DOMESTICHE, L. Cecchinato(a), M. Corradi(a), E. Fornasieri(a) F. Mancini(a), M. Marcer(b), ((a) Dipartimento di Fisica Tecnica, Università degli Studi di Padova, via Venezia, 1, Padova, Italy, (b) ACC Application Eng. Lab., via Salvatelli, 4, Mel (BL), Italy).

SUMMARY OF THE INVENTION

The invention is defined by the features of device claim 1. The dependent claims recite advantageous embodiments of the invention.

There is thus described a control system for a refrigerator compressor, the refrigerator compressor comprising an induction motor having a main winding and a starting/boost winding, the motor being energised from a single phase of an ac mains power supply, the control system comprising: an electronic controller having a power supply derived from said ac mains power supply; a current/voltage sense signal input coupled to said electronic controller to input a signal dependent on a current drawn by said motor or a voltage induced in a winding of said motor; a first controllable switch having a control connection coupled to said electronic controller to control application of power from said ac mains power supply to said main winding; a second controllable switch having a control connection coupled to said electronic controller to control application of power from said ac mains power supply to said starting/boost winding; and a temperature sense input coupled to said electronic controller to receive a temperature sense signal sensing a temperature of a cooled zone of a refrigerator; wherein said electronic controller is configured to control said first and second controllable switches responsive to both said current sense signal and said temperature sense signal to control: i) starting/boost of said compressor; and ii) running of said compressor to control said temperature of said cooled zone towards a target temperature value.

In some preferred embodiments the above described control system is combined with a "smart" (energy efficient) start and/or boost system, as described further later. Additionally or alternatively the electronic controller may also control an average energy consumption of the compressor (in embodiments an energy consumption of said motor both when starting and when running), dependent on the sensed motor current and sensed temperature. Broadly speaking switching the motor on and off facilitates more accurate temperature control, but starting the compressor requires additional energy and when the compressor is switched off some energy goes to waste. The electronic controller balances these competing aspects of the operation of the compressor.

In embodiments of the control system the electronic controller optimises, in particular, minimises, the average energy consumption of the compressor by controlling a time-averaged number of starts of the compressor. For example in embodiments the controller determines a thermal demand signal which is dependent on the deviation of a sensed temperature from a target temperature value (which may be fixed or user-adjustable). Then, dependent on the demand signal, the motor-on-time and motor-off-time may be varied, for example by adjusting values stored in timer registers and/or a control signal threshold for switching the compressor on and/or off may be adjusted, in embodiments, the controller may be configured to limit a minimum time for which the motor is running dependent on this thermal demand signal, for example if the thermal demand is less than a threshold value. The temperature of a cooled zone or compartment need not be sensed directly but could, for example, be sensed by a sensor external to the cooled zone/compartment.

In some embodiments of the control system the electronic controller may be configured to determine an estimate of the average energy consumption, using this with a thermal demand signal to control the first and second controllable switches. Alternatively compressor starting and running energy consumption values may be stored in or presumed by the electronic controller, for example having been predetermined. In general the average energy consumption will be a time-averaged energy consumption over at least one cycle sequence of motor start, run and stopped, optionally over a plurality of motor cycle sequences. The average energy consumption may be estimated, for example, by counting the number of motor starts and/or the time taken to start the motor and/or the time for which the motor is running. Additionally or alternatively the power consumption of the motor, or the approximation to this, may be determined from the current sense signal. More particularly this signal may be combined with a voltage sense signal and, in embodiments, the instantaneous values of current and voltage are sensed at a plurality of time locations throughout an ac mains cycle, multiplying in some of these to estimate a power consumption which also takes into account phase/power factor. Although more complicated, this can be more accurate because the starting energy may vary with gas conditions, mains supply voltage and the like.

While the controller estimates the average energy consumption over a period of time, preferably the system is configured to detect a disturbance in a steady state operating condition of the refrigerator, for example, a door opening and/or a temperature change at greater than a threshold rate. In such a case the time averaged energy consumption may be reset and/ or adjusted and/or suspended for a period of time, for example greater than 30 minutes, one hour, two hours or three hours, in order to allow a steady state condition to be resumed.

In embodiments of the control system the electronic controller includes a motor temperature sense module to sense a temperature of the motor or of one or more of the motor windings. This may then be employed to control an overload protection module to inhibit operation of the motor if the sensed winding temperature exceeds a threshold. The sensed winding temperature may be sensed directly or indirectly, for example by a temperature sensor mounted on the compressor housing (sensing the temperature of the winding itself can be difficult), or from the sensed current in the winding, in particular scaling based upon a temperature coefficient of resistance of the winding.

In embodiments the control system is configured apply a boost current to the motor while determination is made that a power boost is desirable, for example to overcome a high load condition resulting from, say, user control or sensed temperature. In such a case it is preferable to inhibit the boost condition by operation of one or both switches in response to direct or indirect sensing that the temperature of a winding, in particular the starting/boost winding, exceeds a threshold (in boost conditions there is increased risk of overheating).

More generally, the electronic controller may include a motor condition sense module, coupled to an overload protection module, to disconnect power to the main winding when a fault condition is detected. Such a fault condition may comprise, for example, a motor over-temperature condition, a condition of the motor in which the rotor is locked, and/or a condition in which the motor is at risk of stalling.

A locked rotor condition can occur at motor start-up - power is applied to the main winding, and then the starting winding is powered on then powered off, at which point it may then be detected that the rotor is not rotating. This can be detected - before the motor has had a chance to heat up significantly - by detecting that the main winding current is too high, for example greater than a threshold. Additionally it can be detected when the motor is struggling due to, for example, a heavy thermal load and/or a low mains power supply voltage. One can infer this from the temperature of the compressor housing (a proxy for the winding temperature) and/or the motor current. For example the motor current increases as the motor is about to stall so that a stall risk may be detected by a greater than threshold motor current. Optionally the threshold may be compensated for temperature, reducing the threshold as the temperature increases to stop the motor at a lower current.

Thus there is also described a starting/boost control system for a refrigerator compressor, the refrigerator compressor comprising an induction motor having a main winding and a starting/boost winding, the motor being energised from a single phase of an ac mains power supply, the starting/boost control system comprising: an electronic controller having a power supply derived from said ac mains power supply; a sense input coupled to said electronic controller to sense a degree to which said motor is running; a first controllable switch having a control connection coupled to said electronic controller to control application of power from said ac mains power supply to said main winding; a second controllable switch having a control connection coupled to said electronic controller to control application of power from said ac mains power supply to said starting/boost winding; and controller to control application of power from said ac mains power supply to said; wherein said electronic controller is configured to respond to a sensed motor condition dependent on said degree to which said motor is running to perform one or both of: i) opening of said switch to disconnect said starting/boost winding responsive to a determination that said motor has started following application of said ac mains power supply to said main winding of said motor; and ii) closing of said switch to re-connect said starting/boost winding to said ac mains power supply responsive to a determination that a mechanical output of said motor is to be boosted, until said electronic controller determines that a defined condition of said motor is met; and wherein said electronic controller further comprises a motor condition sense module to detect a fault condition of said motor, and an overload protection module coupled to said motor condition sense module to inhibit application of said ac mains power to said main winding responsive to said motor condition sense module detecting said fault condition.

In related aspects there are described an electronic controller configured to implement a control system for a refrigerator compressor as described above, and corresponding methods of controlling a refrigerator compressor and of controlling such an electronic controller. The skilled person will appreciate that the electronic controller may be implemented in hardware, or using a microcontroller controlled by software, or using a combination of both these techniques.

As previously mentioned, in some preferred implementations the above described control systems may be combined with a motor starting/boost control system of the type described below.

The skilled person will appreciate that where references are made to a control system for a refrigerator compressor, this includes a compressor for a freezer.

There is also described provided a control system for a refrigerator compressor, the refrigerator compressor comprising an induction motor having a main winding and an auxiliary winding, the motor being energised from a single phase of an AC mains power supply, the control system comprising: one or more temperature sensors, an electronic controller having a power supply derived from said AC mains power supply; one or more sense inputs coupled to said electronic controller to sense a signal from a said temperature sensor (and optionally to sense current in said motor); a control output to control starting and stopping of said motor; and a controllable switch having a control connection coupled to said control output to switch power from said AC mains power supply to said motor windings; wherein said electronic controller is configured to respond to a sensed temperature (and optionally to motor current), and to control said motor to stabilise a temperature and to control starting, running and stopping of said motor.

There is also described a control system for a refrigerator compressor, the refrigerator compressor comprising an induction motor having a main winding and an auxiliary winding, the motor being energised from a single phase of an AC mains power supply, the control system comprising: a temperature sensor associated with the motor, an electronic controller having a power supply derived from said AC mains power supply; sense inputs coupled to said electronic controller to sense a motor current and a signal from the temperature sensor; a control output to control starting and stopping of said motor; and at least a controllable switch having a control connection coupled to said control output to switch power from said AC mains power supply to said motor windings; wherein said electronic controller is configured to respond to sensed temperature and motor current; and control stopping and re-starting of said motor to limit the temperature of one or both of the said motor windings.

There is also described a starting/boost control system for a refrigerator compressor, the refrigerator compressor comprising an induction motor having a main winding and a starting/boost winding, the motor being energised from a single phase of an AC mains power supply, the starting/boost control system comprising: an electronic controller having a power supply derived from said AC mains power supply; a sense input coupled to said electronic controller to sense a degree to which said motor is running; a control output to control starting/boost of said motor; a controllable switch having a control connection coupled to said control output to switch power from said AC mains power supply to said starting/boost winding; and an impedance coupled in series with said switch between said AC mains power supply and said starting/boost winding; and wherein said electronic controller is configured to respond to a sensed motor condition dependent on said degree to which said motor is running to perform one or both of: i) opening of said switch to disconnect said starting/boost winding responsive to a determination that said motor has started following application of said AC mains power supply to said main winding of said motor; and ii) closing of said switch to re-connect said starting/boost winding to said AC mains power supply responsive to a determination that a mechanical output of said motor is to be boosted, until said electronic controller determines that a defined condition of said motor is met.

Embodiments of the above described approach facilitate efficient use of the auxiliary winding and flexible control of the starting/boost operation which in turn enables power saving and a more "green" approach.

In some preferred embodiments the impedance is a resistive impedance, in particular a PTC thermistor, and the controller is configured to open the switch when it has made a determination that the motor has started sufficiently (the degree to which the motor is running greater than a threshold) to continue without further power being applied to the starting/boost winding. This enables the power in the PTC to be cut earlier than it would otherwise be, thus providing a power saving. Parameters which may be employed to determine the motor running condition include the main winding current and/or current - phase and/or voltage, or even a parameter such as a degree of vibration of the motor. One particularly preferred approach, however, senses a combination of phase and magnitude of the main winding current relative to the phase of the AC mains power supply (voltage) to determine the degree to which the motor is running. (A combination of the main and auxiliary i.e. starting/boost winding current may be sensed since the auxiliary winding current is relatively small). In one approach such sensing is performed by sampling a current dependent on the main winding current, preferably synchronously with the AC mains. Such sampling is phase-sensitive when performed at a plurality of points during an AC cycle, but preferably sampling at a plurality of points during a half-cycle is employed for noise reduction. Further preferably a set or burst of samples is captured during part of a positive and part of a negative half-cycle and these two data sets used, for example by taking a difference between them to determine a phase sensitive measure of the main winding current.

The above described approach is particularly sensitive to the operating conditions of the motor, which is desirable, but one potential disadvantage is that this sensitivity results in the measured phase "gyrating" and therefore in embodiments an averaging procedure is also employed. For example a running average may be determined during an initial start-up period and then either a proportional or absolute change from this detected, optionally resetting the average if a stall or other start-up fault condition is detected.

Whether or not a phase sensitive detection of main winding current is employed, in some preferred embodiments the electronic controller is configured to determine a motor condition by determining an average value of a signal derived from the sense input over an initial period after application of the AC mains power supply. Then the controller may identify when to respond to the sensed motor condition, for example to open or close the switch, by determining a deviation of a value dependent on the sensed motor condition from this initial period average value. In general such an approach may be employed using current magnitude and/or phase and/or the voltage across the motor. The skilled person will appreciate that this approach may be employed to close the switch to boost power to the motor as well as opening the switch when the motor has adequately started, as described further below. To identify a transient load for boosting the motor another parameter which may be employed is rate of change of main winding current; optionally detection of a boost condition and/or stopping of a motor boost may compensate for a voltage and/or temperature of the motor with the aim of providing maximum boost without overload/damage to the motor.

In embodiments the electronic controller derives a power supply from after a switched AC mains power supply to the motor, thus reducing power consumption. However in embodiments it may be desirable to control opening/closing of the switch dependent on a value such as the previously mentioned initial period average value derived from a previous switching cycle of the induction motor (refrigerator compressor). Thus in some preferred embodiments of this type the electronic controller may include a memory element to store data derived from a previous switching cycle, which may be employed in a current switching cycle to provide improved efficiency start and/or boost of the motor.

More particularly, in embodiments the electronic controller power supply is derived from a switched version of the AC mains power supply provided to the main winding of the motor, and the electronic controller includes a memory element to store data derived from the sense input for use in performing one or both of the switch opening and the switch closing after interruption of the AC mains power supply to the electronic controller and motor. However a memory of a previous starting cycle may be used whether or not power has been interrupted to the controller.

In embodiments a start and/or boost time of the motor may be determined and then iteratively reduced on successive switching cycles until the motor is at a threshold of proper starting.

Embodiments of the system use a DC power supply for the electronic controller and to provide useful power savings it is important that this is derived efficiently. One solution to this problem is, counter-intuitively, to rectify a voltage from the AC mains power supply and then to employ a series regulator transistor to reduce this to a voltage for the electronic controller - although this is inefficient during start-up /boost it is efficient at other times and thus overall beneficial. Another solution is to rectify a voltage across the heating resistance of an overload protector for the induction motor (or other series resistance which is always on when the motor is on).

The skilled person will appreciate that these power supply techniques may be employed independently of application of the power to an induction motor starting/boost system. For example they may be employed to power an electronic thermostat or, more generally, a microcontroller or other electronic circuit.

Thus in a further aspect there is described a (dc) power supply circuit configured to rectify a voltage across the heating resistance of an overload protector for an induction motor (or other series resistance through which current is flowing when the motor is on). Optionally an additional (dc) power supply may be derived, for example by rectifying a voltage from the AC mains power supply and then employing a series regulator transistor to reduce this to a lower dc voltage. Optionally one such dc power supply, for example the series regulator, may be employed at a first time, say at motor start-up, and the other at second time, say after start-up. Thus there is also provided a method of powering an electronic circuit or microcontroller from an ac power supply of an induction motor, the method using a first dc power supply, for example a series regulator transistor, at a first time, say at motor start-up, and a second dc power supply at second time, say after start-up.

Options for detecting a transient load of a motor for controlled closing of the switch to boost the motor output have been described; in embodiments the boost may be continued until the controller determines that a defined condition to protect the motor from overload has been met. This may comprise a timer for example with a preset time, or a direct or indirect sensing of the motor temperature may be employed, or a combination of sensed current and/or voltage may be employed, or some combination of these may be used. For example turn-off of the switch may be responsive to the rate of change of sensed current being less of the threshold, or to the voltage induced in a winding (in particular the auxiliary winding) of the motor, or a rate of change of this voltage, being less than a threshold, or responsive to the integrated main winding current (or a value dependent on this) being greater than a threshold value. Optionally the threshold may be determined from a previous switching cycle. Optionally such approaches may additionally or alternatively be employed to control the opening of the switch during start-up of the motor. Optionally the controller may compensate for one or both of a sensed AC mains voltage and a directly or indirectly sensed temperature of the motor, to enable the boost to continue for longer than would otherwise be the case when the voltage/temperature is low so that there is a reduced risk of the motor overheating.

In a related aspect there is provided a method of controlling a refrigerator compressor, the refrigerator compressor comprising an induction motor having a main winding and a starting/boost winding, the motor being energised from a single phase of an AC mains power supply, the method comprising: powering an electronic controller from a switched AC mains power supply to said induction motor; sensing a degree to which said motor is running; switching power from said AC mains power supply to said starting/boost winding using a switch, wherein an impedance is coupled in series with said switch between said AC mains power supply and said starting/boost winding; and using said electronic controller to respond to a sensed motor condition dependent on said degree to which said motor is running to perform one or both of: i) opening of said switch to disconnect said starting/boost winding responsive to a determination that said motor has started following application of said AC mains power supply to said main winding of said motor; and ii) closing of said switch to re-connect said starting/boost winding to said AC mains power supply responsive to a determination that a mechanical output of said motor is to be boosted, until said electronic controller determines that a defined condition of said motor is met.

In a further aspect there is described an induction motor control system for controlling an induction motor having a main winding and a secondary winding, the control system comprising: a system to control power to said secondary winding to start and run the motor at a first level of mechanical output; and an electronic boost system to boost said level of mechanical output from said motor; wherein said electronic boost system comprises a system to sense a current in said main winding and responsive to said sensing to boost electrical power to one or both of said main winding and said secondary winding responsive to said sensed current, and to cease said electrical power boost on determination that a defined condition of said motor is met.

In embodiments the power boost is implemented by boosting power in the main winding of the induction motor. For example the main winding may be operated on a reduced duty cycle current synchronously switched with the AC mains, and the duty cycle increased to boost the power output of the motor. Additionally or alternatively the motor may be provided with a tapped main winding which is switched to boost the effective main winding magnetic field, and hence the mechanical power output of the motor.

There is also described a method of operating an induction motor of a refrigerator compressor, the induction motor having a main winding and a secondary winding, the method comprising: operating said induction motor; sensing a current in said main winding; boosting power to one or both of said mains and secondary windings responsive to said sensed current to boost an available output torque of said motor by at least 25%, preferably at least; and ceasing said power boost on determination that a defined condition of said motor is met.

This approach allows the motor design to have optimal efficiency at low load, recognising that for the majority of the time the motor is not operating at a high load. Providing a 25% available output torque boost provides headroom enabling a designer to design a motor for increased efficiency in normal use; in embodiments a 30%, 40% or 50% available output torque boost may be provided. The operating of the induction motor may, in embodiments, comprise operating the motor, on average, at a power of at least 50% of a power rating of the motor, said operating power defining an available output torque of said motor. In embodiments the induction motor is operated, on average, at a power of at least 30%, 40%, 50%, 60%, 70% or 80% of a power rating of the motor.

In embodiments of the above described method of operating an induction motor, counter-intuitively the power may be reduced or removed from the first, "main" winding in the higher power "boost" condition when the power is applied to the secondary winding. This is because the first winding may be at a different mechanical phase to the secondary winding and thus for optimum driving should be driven at a different electrical phase to the first winding (or the windings should be arranged so that they are at substantially the same mechanical phase). Thus in embodiments, effectively the boost function swaps the electrical drive from one winding, the main winding, to another, the secondary winding.

The skilled person will appreciate that features of aspects and embodiments of the above described control systems may be combined in any permutation.

BRIEF DESCRIPTION OF THE DRAWINGS

These and other aspects of the invention will now be further described, by way of example only, with reference to the accompanying Figures in which:

Figure 1 shows typical behaviour of a refrigerator compressor induction motor with an auxiliary winding controlled by a PTC;

Figure 2 shows a reduced energy consumption approach;

Figure 3 illustrates the energy saving of Figure 2;

Figure 4 shows a first example of a starting/boost control system for a refrigerator compressor induction motor according to an embodiment of the invention;

Figure 5 shows an alternative sensing arrangement for the system of Figure 4;

Figure 6 shows a further alternative sensing arrangement for the system of Figure 4;

Figure 7 shows an example flow diagram for the electronic controller of the embodiment of Figure 4;

Figure 8 illustrates an example of a preferred averaging process for use with embodiments of the invention;

Figure 9 illustrates synchronised phase-sensitive current sampling for us in some preferred embodiments of the invention;

Figure 10 illustrates a first example of a motor control system with a boost function;

Figure 11 illustrates a second example of a motor control system with a boost function;

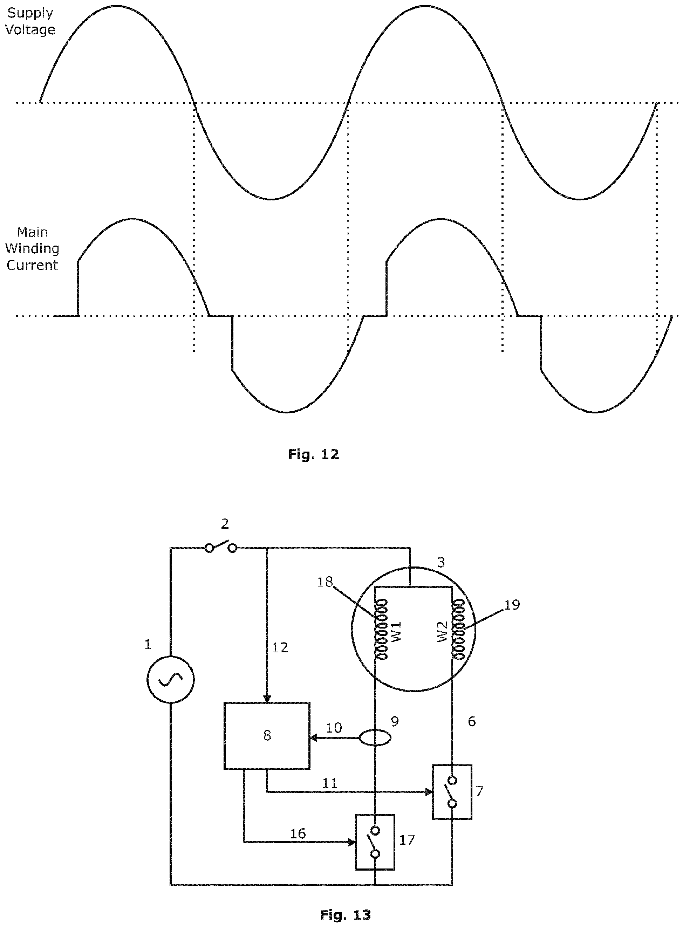

Figure 12 illustrates an example of duty cycle control to provide an induction motor boost function for a refrigerator compressor;

Figure 13 illustrates a third example of a motor control system with a boost function;

Figure 14 illustrates a fourth example of a motor control system with a boost function;

Figure 15 illustrates optional arrangements for a self-contained refrigeration appliance with alternative locations for a control device and optional user control;

Figure 16 illustrates cyclic on/off control of a refrigeration motorcompressor to provide varying degrees of refrigeration effect;

Figure 17 illustrates an example of control laws to vary the running (on) time and cycle time for a motorcompressor to match variable refrigeration demand;

Figure 18 illustrates a motor control and protection system which includes a sensor to monitor a motor temperature and protects the motor from overheating;

Figure 19 illustrates a refrigeration motorcompressor control system which includes an optional user control and a temperature sensor which stabilises the temperature of a refrigerated zone; and

Figure 20 illustrates a refrigeration motorcompressor control and protection system which includes a sensor to monitor a motor temperature, an optional user control and a temperature sensor which stabilises the temperature of a refrigerated zone and protects the motor from overheating.

DETAILED DESCRIPTION OF PREFERRED EMBODIMENTS

We will describe a motor control system; its features and benefits optionally include: Use an electronic switch to control power to the auxiliary winding to avoid wear and acoustic noise; Control the electronic switch to reduce the energy used to start the compressor; Control the electronic switch to re-apply power to the Auxiliary winding if the motor is subjected to a high transient load while it is running so that the motor can continue running instead of stalling; Control electrical power to the motor via one or more switches in order to boost motor output for extended periods of high motor load; Arrange the motor design for highest efficiency at part load and for the ability to provide boosted mechanical output via electrical control of the windings; Use a switch to control also the power to the main winding; Control the main winding switch and the auxiliary winding switch to start, run and stop the motor; Use a temperature sensor to monitor a temperature of a refrigerated zone and a controller to operate the main and auxiliary switches to stabilise a temperature of the refrigerated zone around a preset value; Use a temperature sensor to sense a temperature associated with the motor and a motor current sensor with a controller to operate the main and auxiliary switches to prevent overheating of the motor; Consume no, or low, additional power in the control device.

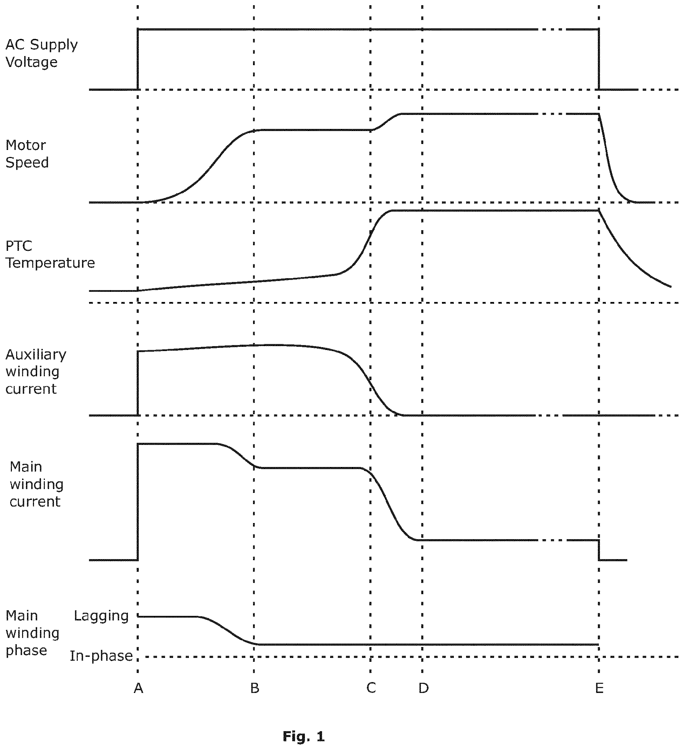

Figure 1 shows the typical behaviour of a motor with Auxiliary winding controlled by a PTC. At time "A" the motor is stationary, the PTC is cold and power is applied to the Main winding and to the Auxiliary winding via the PTC. The motor accelerates until it reaches a substantially constant speed by time "B". As the motor reaches this speed, there is a corresponding reduction of current in the Main winding. In the Auxiliary winding current is still flowing, possibly at a slightly higher level because PTCs often exhibit a lower resistance at intermediate temperatures compared to low temperatures. It is normal for the system to be designed so the PTC does not reduce the Auxiliary current until significantly later than the time when the motor is running. This is necessary to ensure that the motor will start reliably under adverse conditions (residual motor load, high motor temperature, worn motor with mechanical resistance etc.). Around time "C" the temperature of the PTC rises rapidly so there is a fast decrease of Auxiliary current. The reduction of current allows the motor to accelerate to the normal running speed and the current in the Main winding reduces accordingly. Conditions remain substantially constant from time "D" (unless the mechanical load changes) until the supply to the motor is disconnected later at time "E".

Between times "B" and "C" the additional power applied to the Auxiliary winding is not providing a benefit in terms of improved starting. This causes unnecessary energy consumption as a result of the extended time for which Auxiliary power is applied and for the increased Main winding current during this time. So, if the Auxiliary winding power is disconnected earlier, around time "B", there will be a reduction of total energy consumed during starting of the compressor.

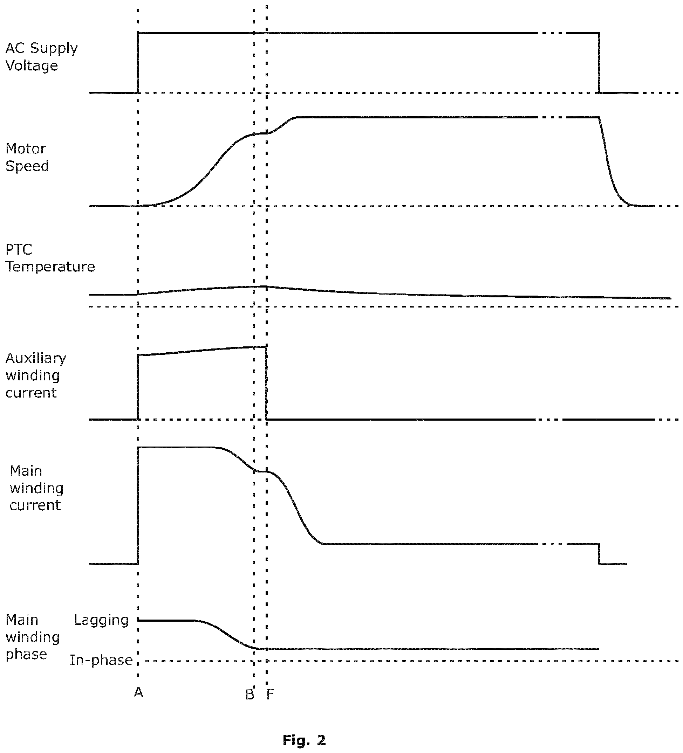

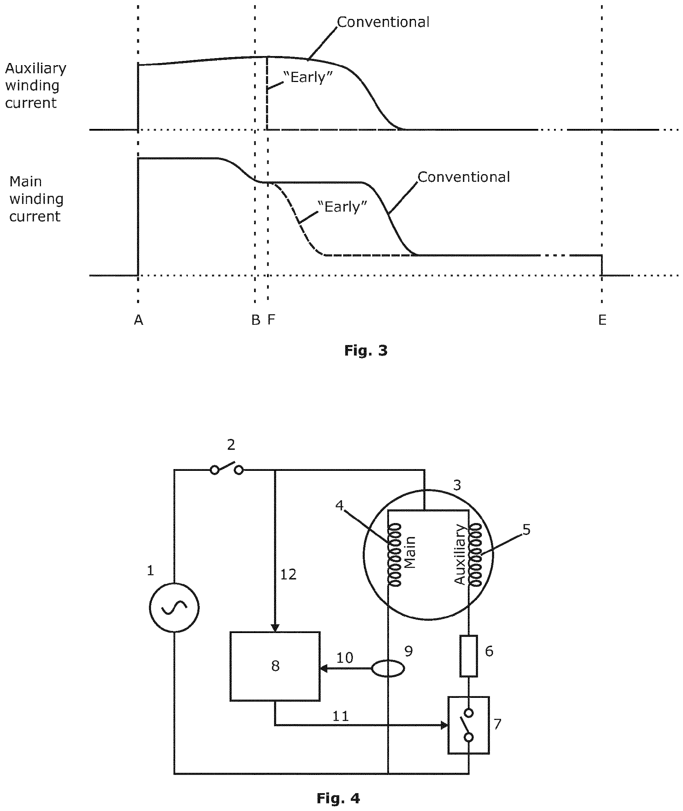

Behaviour like this is shown in Figure 2. Up to time "B" the conditions are the same as shown for the conventional starting in Figure 1. At time "F", a short time after time "B", power is disconnected from the auxiliary winding and the motor speed increases to the normal running speed. Motor currents reduce earlier compared to the conventional start. This is summarised in Figure 3. For both the Main and Auxiliary winding, current profiles are shown for conventional starting and for "early" disconnection of the auxiliary current. It can be seen that there is a significant reduction of integral of current for both Auxiliary and Main windings, so there will be a corresponding reduction of energy consumed during the starting process.

A system is shown in Figure 4 that implements this method of early disconnection of Auxiliary winding current. AC Power source 1 (mains supply, for example) connects to motor 3 via switch 2. This switch is used to turn the motor on and off; an example is a thermostat in a refrigerator where the motor operates the compressor to provide the cooling. Motor 3 is provided with a Main and an Auxiliary winding, the Main winding being powered from the power source while switch 2 is closed. Auxiliary winding 5 is powered from the source via switch 7 and resistance 6. The latter is included to improve starting, as previously described, and could be a fixed resistor or a PTC. Switch 7 can be any suitable switch such as a triac, electromagnetic relay or combination of devices such as power MOSFETs or IGBTs. Some of these devices can switch only unipolar current, so to switch AC current need to be used in pairs or in conjunction with a full-wave rectifier. Control circuit 8 accepts a signal 10 from a current sensor 9 associated with the Main winding. Circuit 8 processes the signal and provides a control signal 11 to close or open switch 7. Optionally, control circuit 8 may accept a signal or power from the power source 1 before or after (as shown) switch 2.

Circuit 8 is arranged to:

- Close switch 7 when power is applied to the motor. The circuit detects this either via the current in the main winding, indicated by signal 10, or by increase in voltage indicated by signal 12. When switch 7 is closed, power is applied to Auxiliary winding and the motor starts to rotate.
- Either before or shortly after closing switch 7, circuit 8 samples (or measures) the current in the main winding, as represented by signal 10.
- While the motor is starting, the circuit monitors the current in the main winding (via signal 9) to detect when the current has fallen by more than preset fraction. For example, from the initial sampled level of signal 10, a threshold is derived as a fraction of the sample. Subsequently, the level of signal 10 is compared to this threshold.
- Signal 10 may also be processed to detect that it is steady. Indicating that the motor has either not started or has reached a constant speed after starting.
- When the circuit detects the current has fallen by more than the preset fraction and/or the signal 10 has reached a steady value after falling, the circuit opens switch 7 via control signal 11. Optionally, the circuit may delay opening of the switch by a preset time delay to ensure the motor has properly started.
- Optionally, if the circuit does not detect a sufficient fall of the current within a preset time limit, it opens switch 7 as if the current had reduced. This preset time limit is chosen to be longer than the maximum starting time of the motor.
- Switch 7 is maintained in the open condition until power is removed from the motor then re-applied. This sequence is detected by circuit 8 either via the current in the main winding (via signal 10) or from fall of voltage applied to the motor, as sensed by signal 12.

For reliable operation it is important that the circuit is insensitive to small variations of the main winding current that may occur early in a normal starting process but which do not indicate full starting of the motor. A preferable method to do this is to estimate motor current during a short period after power is initially applied to the motor. The period is chosen to be shorter than any normal time taken to start the motor and variations in current in this period can be monitored.

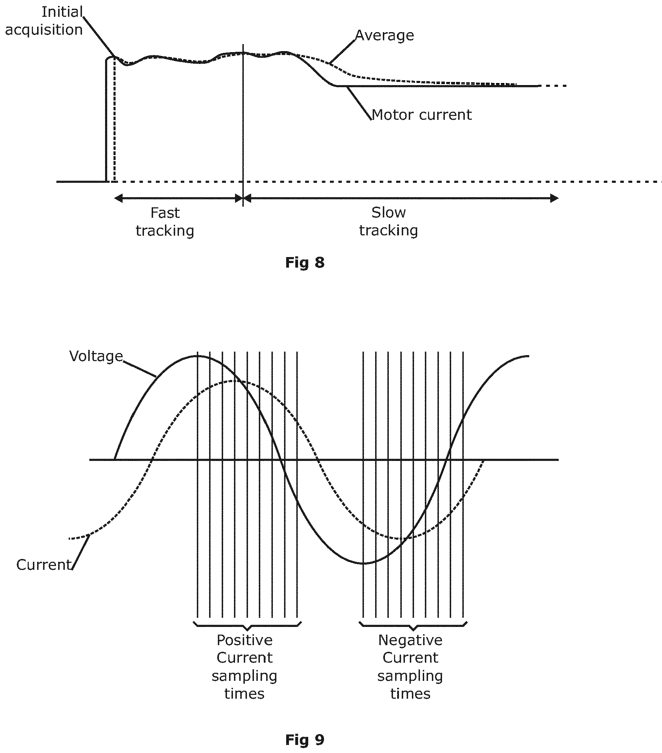

A preferable method is to use an "exponential decay average" calculation. In this, an average value is updated when a new sample of motor current is taken and new average is calculated as $(1-X)*average + X*Sample$, where X is a small fraction. Higher values of X causes faster response to changing currents. This average calculation as started with a first initial sample (Average = Sample), then the tracking rate can be changed subsequently by varying the X factor. With a low value of X factor, the average will change slowly (assuming regular samples are taken). The process is illustrated in Figure 8. The objective is to make an accurate estimate of the average motor current before the time the motor could have properly started.

This average is then used to detect the fall of motor current that results from starting of the motor. When the motor current falls significantly in relation to the average then the motor is deduced to have started. A method to do this is to compare new samples of motor current to the average and if the motor current is lower than the average by a margin (expressed as a fraction of the average) then starting is detected. For improved reliability it is preferable to avoid false detection of starting in a case when only a small number of motor current sample values are low. Conveniently this can be done by using a counter that is incremented whenever a sample is determined to be sufficiently low in value. If any motor current sample is above the threshold then the counter is reset to zero. Reliable starting can then be determined when the count exceeds a preset value. This method has the additional benefit of introducing a small delay from the point when the motor current falls below the threshold when starting is actually determined. This delay is useful to ensure proper starting of the motor.

Techniques described above preferably operate using sample measurements of motor current taken at regular intervals. Because there can be noise and distortion in the voltage and current waveforms it is preferable to sample or measure the current at several points during an AC mains half cycle. Synchronising the sampling to a mains cycle provides an additional benefit which gives increased sensitivity to motor starting. Figure 1 (bottom) shows both the typical motor current profile and the way that the phase of the current varies during the starting process. Initially, when the motor is stationary or running slowly, current in the main winding is typically lagging (inductive). As the motor speed increases the phase of the current moves towards the in-phase condition. If the samples of current are taken in a way that is sensitive to the phase of the current then this can be used to increase discrimination between stationary (or slow) and higher speed (started). An example is shown in Figure 9. Multiple samples of current taken in "bursts" where the timing of the bursts is synchronised to the voltage cycle of the mains supply. Each cycle of the mains supply has a "positive" burst of samples and a "negative" burst of samples. Calculation can be performed where the instantaneous current values in the positive burst summed and those in a negative burst are subtracted. The result of this calculation is a value that is responsive to the phase of the current. Where the phase of the current is aligned with the timing of the bursts a maximum value is obtained and if the phase of the current changes so it is no longer aligned with the burst then the calculated value reduces. Preferably the bursts are synchronised with a lagging phase so the calculated value reduces either if the phase advances or if the current amplitude reduces. Typical motor starting characteristics cause both reduction in the magnitude of the current and advancing of the phase of the current so both of these contribute to reduction in the calculated value. This calculated value of current is then used as described previously to determine an average and to detect when motor current has reduced below a threshold calculated from the average.

Optionally, the circuit 8 may monitor the current in the main winding (via signal 10) during running of the motor. The level of this current is indicative of the loading of the motor, a high current indicates high load. In applications where there can be a transient motor load it can be an advantage to provide extra power to the motor to overcome this transient load. This can be preferable to using a larger motor because a smaller motor is typically lower cost and can have lower energy consumption during the majority of running conditions at lower load. If the load on the motor is excessive it may stall, which is inconvenient and may also cause overheating. To improve resistance to stalling in induction motors like these it is possible to re-energise the auxiliary winding for a short time. This boosts the torque available when the rotor is running slowly (at high slip). When the transient load is reduced or the motor reaches a higher speed (where the torque is sufficient with only the main winding energised) then the auxiliary winding current can be disconnected. Circuit 8 can detect conditions of high load via the current monitor (signal 10) and if it rises sufficiently can close switch 7 for a period to boost power to the motor. Optional methods to detect such transient loads include:

Current, monitored via signal 10, rises above a preset fraction of the original sample (taken during the last start process).

As above, but the preset fraction is adjusted to account for change of supply voltage (monitored via signal 12). The supply voltage is measured during the starting process and subsequently during running. The ratio (present voltage/starting voltage) is used as a factor to adjust the threshold fraction.

As above, but the preset fraction is adjusted to account for increase of Main winding resistance due to increase of temperature. The correction to the threshold fraction can be made as a fixed factor multiplied by the change of motor temperature (measured at some accessible point on or near the motor by an electronic sensor, not shown, connected to circuit 8) from the last starting process to the present condition.

By deriving a rate-of-increase of current signal then detecting when the rate of change exceeds a threshold calculated as a preset factor multiplied by the level of current (either the initial sample or the present current). A high rate of increase of current is characteristic of the motor being subjected to a heavy transient load.

Combinations of the above, using weighting factors or the principles of fuzzy logic.

When a high-load condition is detected, the switch 7 can be maintained closed for the duration that the condition persists. To detect this, a reference motor current may be measured immediately after the switch is closed because energising the switch may alter the current taken by the motor. Motor current is then monitored and if it falls below a preset fraction of the reference value then the high-load condition is determined to have finished and the switch can be opened. Alternatively, or additionally, the switch can be held in the closed condition for a maximum of a preset period. The period is chosen to be sufficient to overcome likely high-load conditions but not so long as to cause overheating of the motor.

In some applications and under some conditions it may be beneficial to use the boost function for an extended period and not only to overcome a short term transient condition. For example if the motor is subject to a high mechanical load (in the context refrigerators this can be caused by a hot item inside the refrigerator, which takes time to cool down) then it is preferable that the boost function is continued for as long as the higher load condition persists. The limitation is normally overheating of the motor windings. Another condition could be when the mains supply voltage is low. Here the motor torque will be reduced and the boost function may be useful to overcome normal operating mechanical load. Heating of the motor may also be reduced in conditions of lower mains supply voltage (because reduction of iron loss) so it may be possible to operate in a boost mode for an extended period.

If a high load condition persists for a long time then it may be desirable to stop the boost function (and stop the motor if the reduced motor output power is insufficient to operate the load). Overheating of the motor windings is normally the limiting factor to the degree and length of time for which the boost function may be employed. A system using the boost function preferably also has some method to avoid this overheating. A simple method is to allow the boost function to continue only for a maximum preset time however this will have to be set cautiously to avoid unsafe overheating conditions. Consequently the benefit of the boost function will be reduced. Preferably one or more systems included to allow the boost function to continue for longer periods when there is less risk of overheating of the motor. Techniques to achieve this include:

Sense temperature at a location near to the motor and reduce the allowable boost time if the sensed temperature is higher.

Monitor the motor current as a predictor of the temperature rise of the windings above the ambient. Use a moving average of motor current in combination measurement of local motor temperature, optionally with some integral function, to predict when the motor windings risk becoming too hot.

Power consumption of the system can be reduced by increasing the motor efficiency, but this is limited by the constraints of size, cost and the desire to produce sufficient output power for worst-case load conditions. A further alternative strategy is to design the motor for optimum efficiency under typical (low torque/power) operating conditions and to provide additional features or controls to allow the motor output power to be boosted for worst-case conditions.

Since the worst-case conditions happen infrequently, reduced efficiency under these conditions is not so critical. Worst-case conditions can include not only high motor load but also adverse operating conditions such as high motor temperature or low mains supply voltage. Since these conditions can persist for an extended time it is desirable for the "boost" function to operate for longer than just a short transient event. To manage normal and boost operating modes it will be necessary to have a control system capable of distinguishing low and high demand on the motor and protecting against adverse behaviour, for example motor overheating.

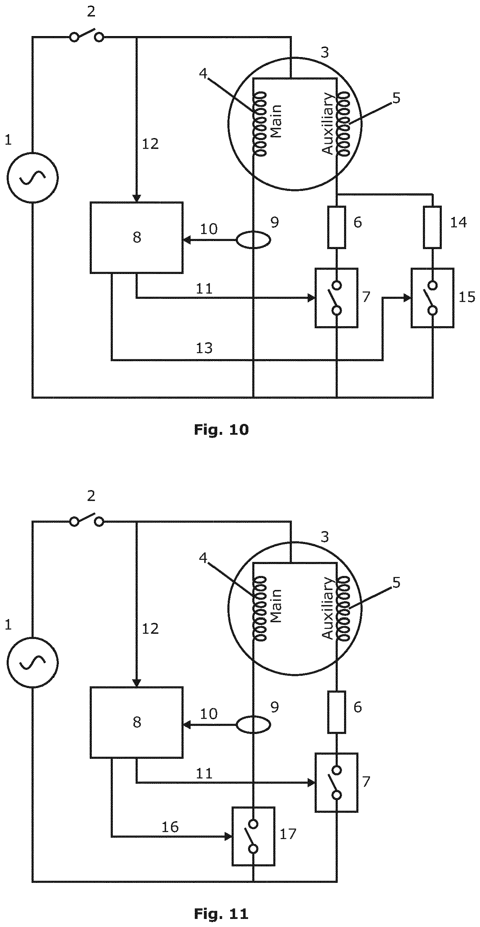

The boost function can be used with motors designed only for conventional operation and no boost function. These motors typically use resistance starting and running with power provided to only a main winding, but sometimes low power is applied to an auxiliary winding via a "run capacitor" this could, for example, be connected between the bottom ends of the main and auxiliary windings in Figure 4. A simple application of the boost function to such motors is to reapply high power to the auxiliary winding, for example by closing switch 7 (Figure 4). In this case power is applied to the winding via impedance 6, usually a PTC which has a resistive characteristic. Such motors are normally designed to work with a particular PTC to give adequate starting characteristics. If this circuit is re-energised the motor will provide more torque but only if it is running below its normal operating speed. This may be a useful characteristic under conditions of heavy overload however it would also be limited in duration because of the heating effect on the PTC, which would switch off if the boost function was applied for an extended period. Extended operation can be achieved by using a resistive impedance which maintains its characteristic even if used for a long period. To provide improved torque at normal operating speeds it is desirable to achieve a larger phase difference between the main winding current and the auxiliary winding current when the boost function is applied. With resistive starting the motor requires a phase advance of auxiliary winding current relative to the main winding current. A capacitive impedance fitted in series with the auxiliary winding can give this. If sufficient current is provided by such a capacitive impedance then it can be possible to start the motor using this current instead of using a conventional resistive starting. In this case the system illustrated in Figure 4 would use a capacitor as impedance 6. Alternatively it is possible to apply to current through an additional impedance and switch such as illustrated in Figure 10. A switch 7 and resistive impedance 6 start the motor using resistive starting. Impedance 14 (which is optional) and switch 15 control boost current to the auxiliary winding. Impedance 14 can be resistive or, preferably, capacitive as this would boost torque at higher motor speeds. Some conventional motors are used with a run capacitor connected to provide phase-advanced current to the auxiliary winding during normal running. These provide a lower level of current in the auxiliary winding; to effectively boost operation capacitive impedance 14 may provide a higher level of capacitive current.

Preferably, motors are designed to make optimum use of a boost function and there are several options of how this boost function can be configured with a new design of motor.

| Option | Figure ref. | Motor features | Operating method |
|---|---|---|---|
| 1 | 10 | Compared to a conventional motor (i.e. no boost function), the auxiliary winding has a lower resistance and higher inductance. | As described previously, boost current is provided via impedance 14 and switch 15. The reduced resistance of the auxiliary winding allows boost operation for extended periods without excessive heating of the winding. Preferably impedance 14 is capacitive so that there is a large phase angle difference between the current in the main winding and the current in the auxiliary winding. |

(continued)

| Option | Figure ref. | Motor features | Operating method |
|---|---|---|---|
| 2 | 11 | The main winding is designed for optimum efficiency when it is operated from phase-switched AC mains supply voltage as shown in Figure 12 but can operate with higher, or full, AC mains supply under conditions of high duty. | Switch 17 (Figure 11) controls power to the main winding. It is turned on synchronously with the mains supply voltage but with a time delay as shown in Figure 12. Turn off of the switch can be coincidental with a zero crossing of the supply voltage or with zero current in the winding (typically in the case of a triac being used as the switch). The effect is to apply a lower RMS voltage to the winding. When the motor is operating below maximum load the reduced RMS voltage is sufficient to provide the required power but power losses are reduced because of the lower magnetic flux and current in the motor. During starting and when high torque is needed Switch 17 is operated at a higher duty or continuously to provide a higher or maximum voltage to the main winding. Switch 7 provides current to the auxiliary winding to start the motor, for example by resistive starting. Optionally Switch 17 can be operated with a small time delay during starting to improve the phase difference between main and auxiliary current. |
| 3 | 13 | Motor 3 is provided with two windings W1 and W2, either of which can be used to run the motor. One winding (W1, for example) applies a higher flux to the rotor so that high torque can be sustained when the motor loading is high. The other winding (W2) applies a lower flux to the rotor to give sufficient flux for lower load conditions. W1 is optimised to give the maximum required torque, while W2 is optimised for maximum efficiency under conditions of reduced torque and. | Switch 7 or switch 17 is closed to energise one or other of the windings. Under conditions of reduced load the winding optimised to those conditions is energised whereas if the motor load is high the other winding is energised. To start the motor either phase-switching needs to be used on one winding while full power is applied the other winding (as described above). Alternatively an impedance can be inserted in series with one of the windings to increase the phase difference between the currents. This may be disadvantageous to the running conditions so a further alternative is to provide an additional switched current path to one winding, for example as illustrated in Figure 10. |
| 4 | 14 | Main winding 4 of the motor is provided with a connection 24 to a tapping point. The winding and tapping point are designed so a high flux is provided to the rotor if the AC mains supply is applied across the tapping point 24 to the common point 25, and a lower flux is generated if the supply voltage is applied to the full main winding. The windings and levels of flux are designed for maximum efficiency at a lower load when the full winding is energised or higher torque output, but lower efficiency, when part of the winding is energised. | Power is applied to the full winding via switch 23 or part of the main winding by switch 21 according to the level of load on the motor. |

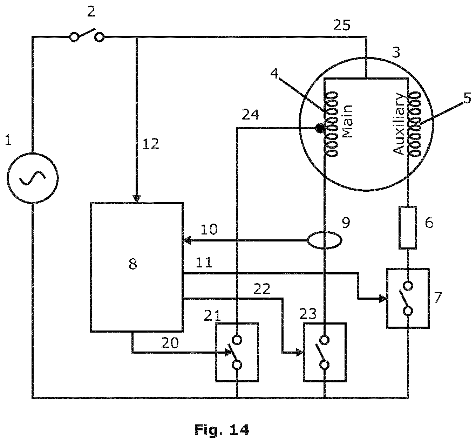

Circuit 8 controls the various switches in the system to start, run and boost the motor. Control of these modes and switching between the modes should be done in accordance with conditions of the motor. These are monitored and communicated to circuit 8. Motor current is an important parameter and Figure 14 shows a sensing device 9 communicating a signal 10 representative of current parameter or parameters (e.g. AC or RMS amplitude, instantaneous amplitude, phase shift relative to reference or wave shape) to control circuit 8. Other characteristic parameters that may be used by circuit 8 to control the system include supply voltage (12) and motor temperature which can be detected by a conventional sensor (e.g. thermistor, thermocouple, semiconductor junction etc.) in proximity to the motor (not shown).

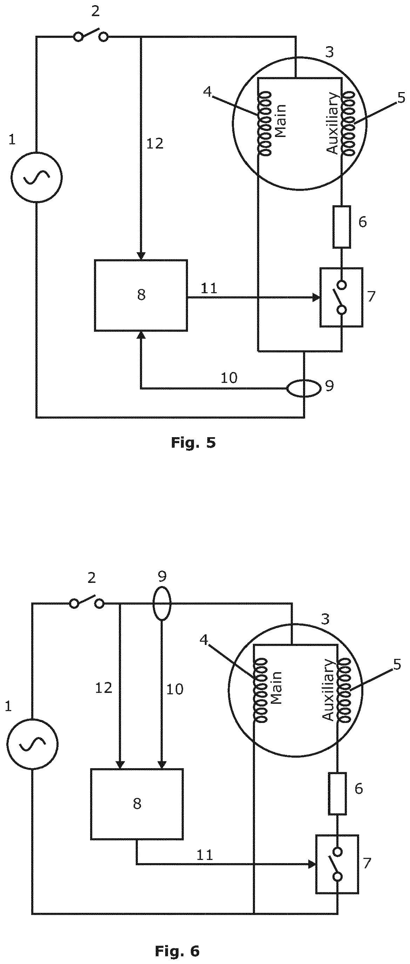

Optional locations for the current sensor 9 are shown in Figures 5 and 6. In both cases, the sensor monitors the sum of Main plus Auxiliary currents. Typically there is only a moderate change of auxiliary current during the starting process, so the fall of main winding current can still be detected reliably but a different fraction should be used for the threshold fraction that is used to trigger disconnection of the auxiliary current. In these configurations it may be convenient to use part of the conventional "overload protector" (OLP) as the current sensor 9. Often an electromechanical OLP is used to protect such motors from overheating during stall or overload conditions, such as described in US2768342. Included in these devices are an electrical resistance heater and this resistance can be used to sense the current flowing through the device. Typically they are inserted in the power supply to the motor and carry both the Main and Auxiliary currents. The voltage across the resistance can be used as the signal 10 to monitor motor current. This is advantageous in two ways:

- Cost of an additional current sensor is avoided.

- No additional power is consumed. In contrast, an additional resistance used to detect the motor current would consume additional power.

Alternative means to detect the motor current (Main only, or Main plus Auxiliary) include:

- Resistance connected in the supply circuit.
- Hall-effect device to detect the magnetic field generated by a conductor carrying motor current.
- Inductive coupling between a conductor carrying motor current and a sensing conductor.

It is preferable to detect current only in the Main winding as this gives more reliable discrimination between the "starting" and "started" conditions. Hence it is preferable to use a current sensor associated with the circuit supplying only the Main winding. A low-cost method is to insert a resistance in this circuit and monitor the voltage across the resistance. However, to avoid consuming significant additional power, the resistance should have a low value, preferably less than 1ohm and more preferably less than 0.1ohm. This gives only a small voltage to detect and this may require amplification before processing to detect fall of current. An economical method to provide such a resistance is to use a length of copper track included in the printed circuit board (PCB) that is also used in the construction of the system.

Where the motor is used in a system that frequently starts and stops the motor (e.g. a refrigerator), an alternative method can be used to determine the necessary time for which switch 7 has to be closed to start the motor. One method is to analyse motor currents and/or voltages after the starting process to determine (calculate) how efficiently the motor started then adjust the timing for switch 7 in subsequent starting processes to reduce the energy consumption. Some techniques to achieve this include:
Monitor the amplitude of the main winding current after the switch has been opened. If the motor starts efficiently the current falls quickly and remains below a fraction main winding current measured early in the starting process. A high current indicates the compressor stalled or did not start properly. A method to adjust the time used for successive starting processes is to use initially a long time then to reduce the time successively by quanta. This is continued until the rate of fall of main winding current (following a given start process) falls below a threshold, in which case the time is increased for the subsequent start process. Should the main winding current rise above the preset threshold (fraction of the current measured during starting) then it could indicate the motor has stalled. In this case a long time should be used on the following start process to ensure starting, and adjusted automatically thereafter.

Monitor the amplitude of the voltage induced into the auxiliary winding after switch 7 is opened. An efficient start is characterised by a rapid increase to a substantial induced AC voltage. Stalling or poor starting is indicated by a slow increase of voltage and/or to a low final voltage. Adjustment of the time used can be in a similar manner as described above. A slow rise or to a low voltage causes the on-time to be increased in subsequent start processes

Monitor the amplitude of the current in the main winding and calculate an integral of current amplitude over a period sufficient to include the consequent behaviour of the motor after starting (e.g. 10 to 20 seconds). Efficient starts will have a low integral, inefficient starts will have a higher integral. To find the optimum timing, the start time used is reduced from an initial long time until the integral (from successive starts) no longer reduces significantly. Once the optimum has been found, it can be tracked by testing longer or shorter on-times for switch 7 in successive starting processes. If a longer time gives a lower integral compared to a shorter time, then the time used is increased by a quantum and vice-versa.

In these methods the control circuit uses an on-time for the switch which varies in response to the result from the previous starting process. Thus continuous power is applied to the control circuit to maintain a volatile memory or the control circuit must include some other store (such as non-volatile memory, or an analog voltage on a capacitor). When the motor is required to be started, the control circuit uses an on-time for the switch 7 that depends on the result of the previous starting process, or a default value where it is the first starting event. After the result of the starting process is detected by the control circuit (e.g. successful/unsuccessful, or quality of start characterised by rate of rise/fall of motor currents or voltages), information is stored to allow adjustment of the time used for the next starting process.

**Integrated control and energy efficiency**

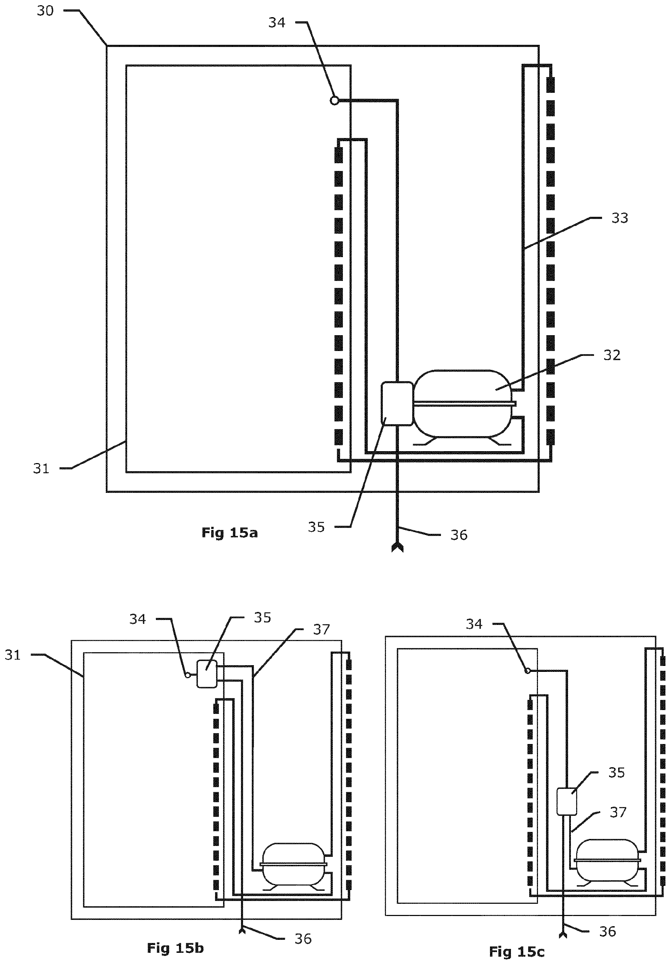

In applications where the motor drives the compressor of a refrigeration system, the running of the motor is controlled so the cooling provides a desired temperature or time-dependent temperature profile in a particular zone. An electronic temperature sensor located in the zone can be used together with a threshold circuit to start the motor when the temperature rises above a first threshold temperature and stop the motor when the temperature falls below a second threshold temperature. Typically these are used with separate motor controls, the separation being a result of the distance between the zone and the motor or because the technology of the threshold circuit (electronic) is different from that of the motor control (PTC and bimetallic OLP). However, if the motor control is electronic then the temperature control function can be integrated into a single electronic system with the motor control function to minimise the size, cost, complexity and energy consumption associated with the overall control functions. This is particularly beneficial in the case of self-contained refrigerators where the zone is near the motor. In this case an integrated control can be sited on the motor, in the cooled zone or in some other nearby location. For example, Figure 15a illustrates a self-contained refrigeration appliance 30 inside which is a zone 31 that is refrigerated by a motorcompressor 32 and gas circuit 33. Temperature sensor 34 is located in the zone 31 and sends a signal to control 35 located on the motorcompressor. Mains power to operate the appliance connects via supply cable 36 to the control.

Figures 15b and 15c show other arrangements where, respectively, the control 35 is located in the zone 31 or elsewhere in the appliance. In both cases cable 37 connects power from the control to the motorcompressor and optionally carries other signals such as a characteristic temperature of the motorcompressor back to the control 35.

A variety of technologies can be used for temperature sensor 34 including, but not limited to: thermistor resistance, semiconductor junction voltage, resistance change of a metallic or non-metallic conductor and thermocouple voltage.

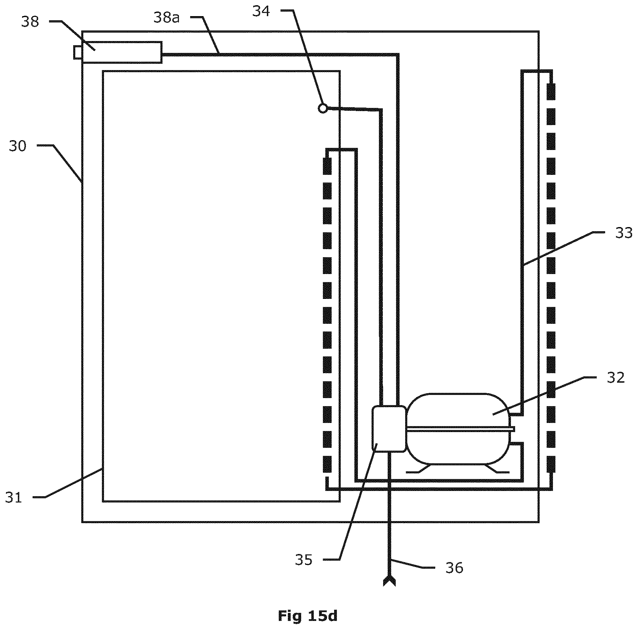

In addition to a temperature sensing function it is common to provide a means for a user to adjust the degree of cooling, normally by variation of the threshold temperatures of the thermostat function. In the configurations illustrated in Figures 15 a, b and c, such a control could be included in the control 35 and activated, for example, by turning a knob or pressing buttons. These locations may not be sufficiently convenient for access by the user in which case a separate user control module 38 could be provided at a more convenient location, for example as shown in Figure 15d, and a cable connection 38a passes an instruction to control 35 to set the desired adjustment or temperature.

While a refrigeration compressor is running, heat is transferred out of the working fluid to the environment via the condenser and heat is taken from the refrigerated zone to the working fluid via the evaporator. For these transfers to take place there have to be a number of temperature differences:

- Between the environment and the condenser
- Between the condenser and the working fluid
- Between the working fluid and the evaporator
- Between the evaporator and the refrigerated zone

As the compressor continues to run these temperature differences tend to increase and this causes a consequent increase in electrical power consumption and reduction of efficiency (amount of heat transferred out of the refrigerated zone in relation to the electrical power consumption). In addition, the motorcompressor temperature increases due to friction, electrical energy dissipated in winding resistance, loss in magnetic cores etc. and some associated heat transfers to the working fluid, further increasing the above temperature differentials and reducing the overall efficiency. Conversely, shorter running time is associated with lower temperature differentials and higher overall efficiency.

It is normal to provide refrigeration capacity sufficient to meet the maximum refrigeration demand likely for a given application (e.g. under conditions of high environment temperature and high heat load in the refrigerated zone). However, for most of their working life, refrigeration systems experience a much lower refrigeration demand. Commonly the lower demand is matched by operating the compressor in a cycle of running and stopped. Normally this on/off cycle is set by hysteresis (upper threshold temperature - lower threshold temperature) in the thermostat; a larger hysteresis causes a longer cycle with the compressor running for a longer period then being stopped for a longer period. Cecchinato et al. (*ibid*) describes tests where changes to the hysteresis resulted in longer or shorter cycles and associated running periods. It was found in the tests that shorter running periods resulted in lower overall energy consumption.

There are, however, limits to what lower energy consumption can be achieved with this technique. Each time the motorcompressor is started a significant amount of energy is needed simply to start the compressor. Also, when the motorcompressor is stopped there is some waste of electrical energy that has been "invested" in compressing working fluid. After the motorcompressor is stopped this compression of fluid does not give any useful cooling effect. So, more frequent on/off cycling of the compressor causes an increase of energy consumption from these factors. There will be an optimum on/off cycling pattern that minimises the energy consumption under particular conditions (thermal load, environment temperature, mains supply voltage, motorcompressor temperature etc.).

If a conventional starter (which employs a long duration of activation of the starting winding, sufficient for worst-case conditions) is used then this will have a particular energy consumption associated with each starting event. By optimising the on/off cycling, an on/off pattern could be found that gives a minimum energy consumption. However, if a reduction can be made of the energy associated with each starting event (e.g. by reducing the time for which the starting winding is activated) then the optimum pattern for energy consumption would have more frequent cycling and lower total overall energy consumption. So, it is particularly advantageous to use the optimised starting method described here with means to optimise the on/off pattern and timing to give a reduction of overall energy consumption.

A factor additional to the starting energy and wasted compressed gas is the time that the compressor has to run to build up pressure differences and flow in order to support effective refrigeration. If the compressor runs for a very short time then very little effective refrigeration will be achieved. Conversely, as has been explained above, longer running is associated with lower overall efficiency. Choice of the optimum pattern and timing is complex and dependent on many parameters: thermal load, environment temperature, mains supply voltage, motorcompressor temperature, refrigerant fill quantity, refrigerant circuit flow and capacity characteristics and the like. We will describe techniques which address these issues.

A variety of methods to choose the optimum are possible which may take more or fewer of these factors into account and yield optimisation of energy consumption with varying efficacy. It is preferable that the method should at least respond to a sensed temperature and a motor current. The motor current is indicative of rate of electrical energy consumption. True power consumption can be evaluated in the optimisation method by combining the current and the motor voltage using techniques known to those skilled in the art. An estimate of total (average) electrical energy consumption can be made from integrating either the current or the power. Some options for optimising the on/off pattern and timing are described below:

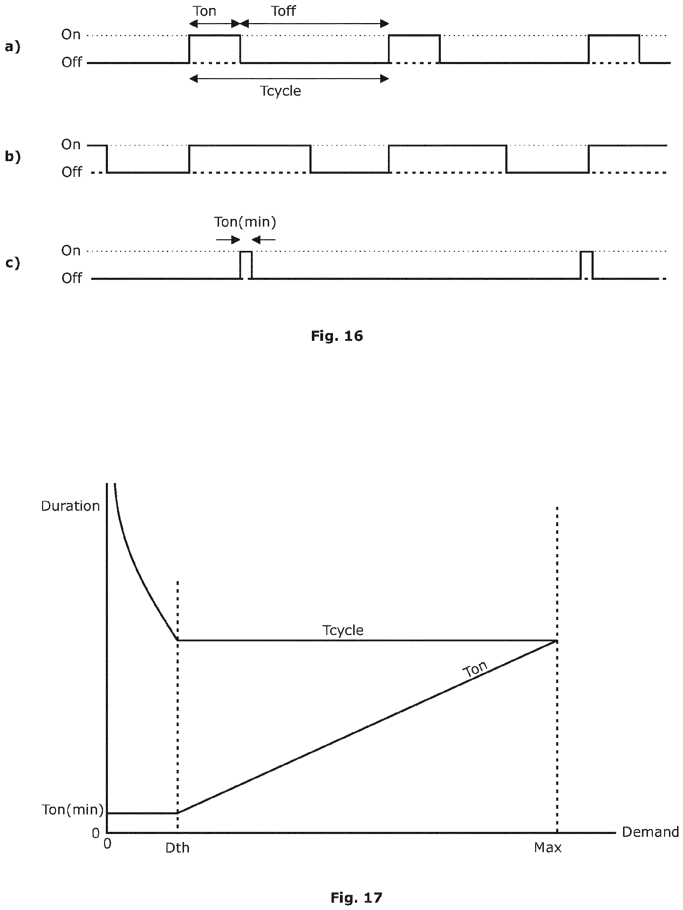

a) After measuring and characterising an example of a particular design of a refrigeration system, the starting energy is estimated and assumed to be constant and the on/off cycle pattern/timing is determined only by the estimated thermal demand. During the development of a particular refrigeration system, which may or may not include optimisation of starting energy, tests are performed to find the optimum on/off cycle time for each of a range of conditions (thermal load etc.) from these, a preferred cycle time is chosen. Optionally, the preferred cycle time may be a range of times dependent on estimated thermal demand. The preferred cycle time, or time range, is preset into the control that is incorporated into the system for subsequent operation. In this control, the deviation of sensed temperature from a preset target temperature value is used to derive an estimate of thermal demand, for example by the "proportional integral derivative" (PID) control method. The control then starts and stops the motorcompressor in an on/off cycle. Referring to Figure 16a, in steady-state conditions the motorcompressor would be activated in a repeating on-off pattern with times as shown. When there is a higher thermal demand the estimate of demand increases as a result of difference between the sensed temperature and the preset target temperature. This is used to alter the proportion of time when the motorcompressor is on, according to some control law such as:

$$\frac{Ton}{Tcycle} = k.Demand$$

Where *Demand* is the estimated thermal demand and k is some constant.

So the cycle pattern for a condition of higher demand could be as illustrated in Figure 16b. When demand is low the period Ton would reduce in proportion to Tcycle. In conditions of very low demand this could result in very short running times for the motorcompressor. As has been explained previously, this may give low efficiency so a better strategy in conditions of low demand is to maintain a minimum running time, Ton, but to increase the cycle time, Tcycle, so that the proportional time spent running is reduced. An example is illustrated in Figure 16c. A control law like this is illustrated in Figure 17 which shows how Ton and Tcycle would vary with demand. When the demand is above threshold Dth, Ton varies according to the equation above and Tcycle is constant. At maximum demand Ton = Tcycle so the motorcompressor is running constantly. When demand is below Dth, Ton is held at its minimum value but Tcycle increases. As demand tends to zero, Tcycle tends to infinity. A suitable control law in this interval could be:

$$Tcycle = \frac{k'}{Demand}$$

Where k' is a constant.

b) In option (a) above, the control characteristics illustrated in Figure 17 are determined during development of a particular refrigeration system then are preset into the control. However, under particular operating conditions this may not give the optimum on/off cycle for minimum energy consumption. An alternative scheme is for the electronic controller to estimate energy consumption under the actual operating conditions then to adjust the cycling pattern and times to minimise energy consumption. This process takes two inputs:

- estimated demand, as described above for option (a)
- estimated energy consumption (see below) and produces two control variables:
- Ton
- Tcycle

To do this it could test different values for the output control variables but this is difficult if both variables are independently varied. A simplification is to apply a simple control law to link the variables, such as proposed for (a):

$$\frac{Ton}{Tcycle} = k.Demand$$

(with a limit to minimum Ton as described previously).

The logic of this is that in the thermodynamic system, proportional running time should relate to thermal demand if temperature is to be stabilised.

Once this link has been made, Tcycle can be optimised to achieve minimum energy consumption. A variety of search algorithms to find optimum (min/max) conditions are known and generally involve a repetitive process in which small disturbances are imposed on the controlled variable (Tcycle), and the response (increase or decrease of energy consumption) is measured. Then the nominal value of the controlled variable is changed accordingly to move nearer to an optimum condition.

This uses an estimation of energy consumption. Actual energy consumption can be calculated by the control from measurements of motor current and voltage, taking into account phase differences and waveform distortion as appropriate. A simple way to do this is to sample voltage and current at a number of times during each mains cycle, and derive digital representations of the values (for example using analog and analog to digital conversion techniques). Power consumption is then estimated by multiplying current and voltage samples in a digital circuit. An estimate of total energy consumption can then be calculated by summing the estimates of power consumption. This summation should preferably run for a period which includes at least a full Ton period, so that it represents energy to start as well as run the motor. There is no need to measure motor energy consumption when it is stopped, but a calculation of average energy consumption may be made, for example by dividing the energy summed for single complete Ton period by the overall cycle time Tcycle. An alternative, more simple estimation of energy consumption could be to assume fixed, predetermined power consumption rates to "starting" and "running", where the starting power is assumed for the period that the start winding is activated and the running power is assumed for the remainder of Ton. This allows an estimation of energy consumption based on simple parameters and times.

It is important that sufficient time is allowed for thermodynamic conditions to stabilise before an estimation of energy consumption is used to adjust the nominal operating parameter(s). For example, in the case of domestic refrigerators is may be desirable to wait 1-5 hours from initial start-up or a disturbance to make an accurate estimate of energy consumption, particularly if the measurement involves measurement of actual electrical power. In addition, if there is a significant disturbance during the estimation then an error may be introduced. Various strategies can be used to avoid excessive disturbance to the optimisation process:

- When a disturbance is detected (e.g. by detecting if the door of a refrigerator has been opened, or there is a sharp discontinuity in sensed temperature) then the estimation period can be restarted.
- In the optimisation algorithm, adjust the nominal operating parameters by only very small amounts in each optimisation cycle.

A common requirement for induction motors and, in particular, refrigeration motorcompressor is a device to prevent overheating of the motor windings due to overloading. Techniques include bimetallic switch and electronic overload protectors as explained above. The former are generally lower cost than the latter but the latter have advantages, in particular the ability to use a single design across a range of different motorcompressor. In the case where the motor control includes a boost function as described previously, the overload protection function is particularly advantageous to maximise the boost amount and duration while avoiding overheating of the motor windings. The overload protection method should preferably take account of the activation of the boost function because the electrical conditions would change simply because of this activation, and different processing and limits would apply to avoid overheating. When both main and auxiliary/Starting/boosting windings are activated, current may be sensed in both windings and used to detect risk of overheating. For example, in resistance-start configurations, the impedance of the auxiliary winding is affected less by EMF induced from motor operation and more by the electrical resistance of the winding. This can be used with knowledge of the temperature coefficient of resistance to estimate auxiliary winding temperature, which is indicative also of the main winding temperature.

A single design of overload protection device that can be applied to a range of motorcompressors is a particular advantage to manufacturers of refrigeration motorcompressors and refrigerators as it reduces or eliminates the need to stock multiple types of overload protector for each of the various motorcompressors that are used. However this benefit may not be sufficient to justify the additional cost of the electronic alternative. If the benefit can be provided at lower incremental cost then it is very desirable. Systems for electronic overload protection, which also include a basic motor starting function, are described in EP1494346 and generally employ:

- Switches to control Main and Auxiliary motor windings
- Means to sense motor winding current, in particular the main winding current
- Temperature sensor to monitor a characteristic temperature of the motor
- Control means to operated the switches according to starting and running conditions of the motor

These are similar parts to those used for the optimised starting devices and integrated thermostat functions described above (refer to Figure 11 for example). The main additional requirement is in the control device which implements measurement and control functions associated with monitoring and protecting the motor windings. In certain embodiments, these functions can be added at very low additional cost, particularly if the control system is embodied substantially as an integrated circuit, and more preferably if digital circuits are used in the implementation of the control methods and yet more preferably if the integrated circuit is, or includes, a microcontroller.

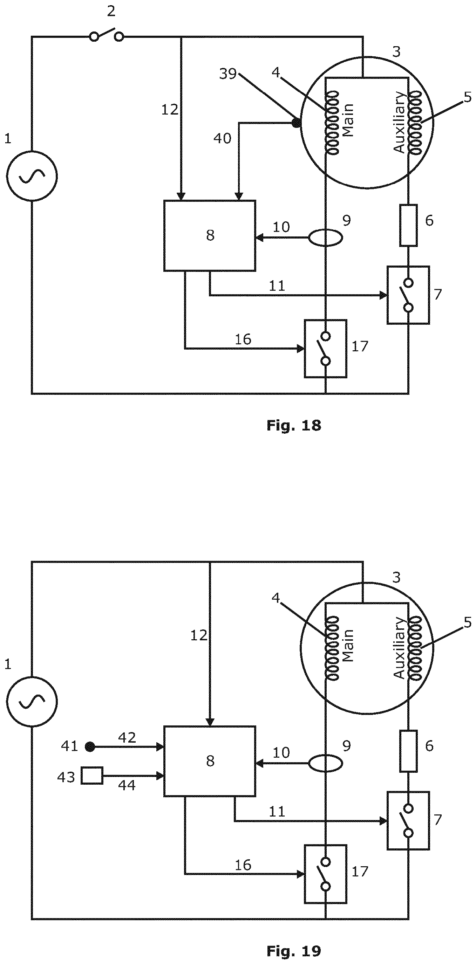

Figure 18 illustrates a system that includes both optimised starting and electronic overload protection functions. It is similar to the system shown in Figure 11, with like reference numerals indicating like features, but has an additional temperature sensor 39 which provides a signal representative of a motor temperature to control circuit 8.

Current sensor 9 (which may be embodied in a variety of ways and in alternative locations in the circuit, as described previously) provides a signal representing a motor current to the control circuit. Signal 12, also provided to the control circuit, represents the mains supply voltage. These signals are sufficient to support an overload protection function, for example similar to that described in EP1494346 (to which reference may be made), so in embodiments no additional components are needed outside the control circuit to implement the overload protection function in comparison to a starting device described previously.

In consideration of integrating a thermostat function with a starting device as described previously, again few additional components are required even if the thermostat function also includes optimisation of energy consumption by methods described above. An integrated system is illustrated in Figure 19, like references having like functions as Figures 11 and 18. The differences are:

- Switch 2 (which, for refrigeration, is normally thermostatic) is no longer needed

- Temperature sensor 41 senses a temperature associated with the refrigerated zone, passing a signal 42 representative of the temperature to control circuit 8

- Optional user control 43 senses a temperature preset or adjustment signal to the control circuit

The control circuit senses the motor current by signal 10 and controls starting, running and stopping of the motor via signals to switches 17 and 18. This gives the control circuit all necessary information and motor control means necessary to implement the temperature control methods described above, optionally with optimisation of operating cycle and timing to minimise energy consumption. Optionally, the preset target temperature held in the control circuit may be adjusted by the user via the control 43. Similarly, as explained in connection with integration of an electronic overload function with functions provided for an optimised starting function in control circuit 8, thermostat functions can be added at very low additional cost, particularly if the control system is embodied substantially as an integrated circuit, and more preferably if digital circuits are used in the implementation of the control methods and yet more preferably if the integrated circuit is, or includes, a microcontroller.

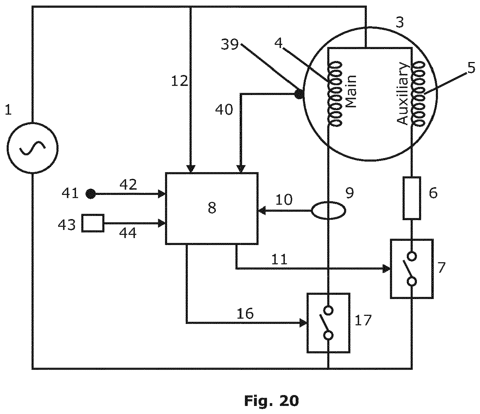

Figure 20 illustrates a system that integrates all of an optimised starting device, an electronic overload protector and a thermostat (with optional energy optimisation and user control of target temperature). It can be seen that great functionality is achieved with few components so very good user and manufacturing benefits can be provided at low manufactured cost.

For all of the methods described, the skilled person will appreciate that the control circuit 8 may be constructed in a variety of ways, including:

- Discrete electronic components to make an "analog" circuit and driver for the switch 7 and optionally switch 17.
- A microcontroller, provided with analog-to-digital converters used to measure motor current (signal 10) and optionally:

  ◦ Mains supply voltage (Signal 12)
  ◦ Motor temperature (e.g. signal 40)
  ◦ Refrigerated zone temperature (Signal 42).

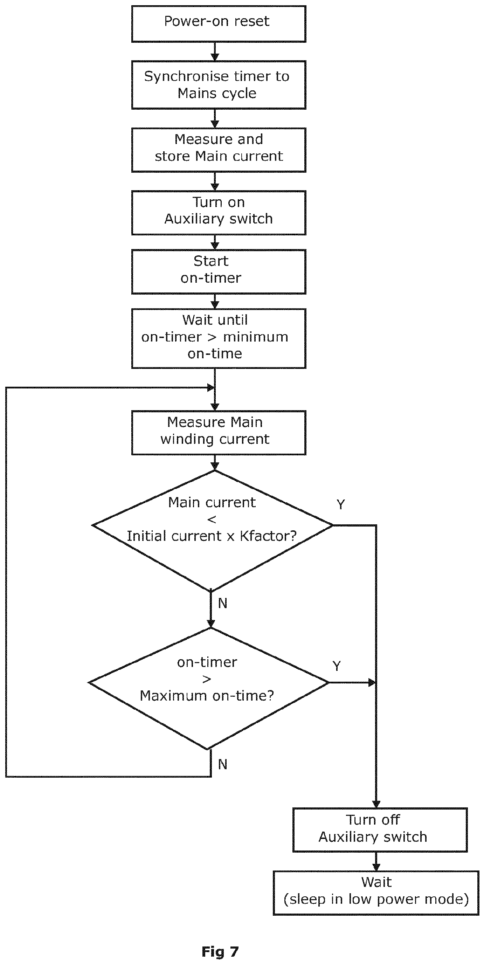

  The microcontroller employs an operating programme and an example (excluding the optional boost, thermostat and overload protection functions) is outlined in Figure 7.
- An integrated circuit that includes analog and digital functions to process the signals 10 and 12 (and optionally 40 and 42), and implement algorithms to provide starting and optionally thermostat (optionally with optimisation of energy consumption) and overload protection functions

In order to maximise energy efficiency of the overall system, the control circuit should be arranged to have low power consumption during continuous running of the compressor. Provided that the "boost" option is not included, it is possible for the circuit to enter a low power, quiescent state after the auxiliary switch has been turned off. For example, if a microcontroller is used in the circuit it can be put into a state commonly called "sleep" where power consumption is very low.

Commonly, low power circuits to implement the control function operate from low voltage DC and the means of provision of this power is important to the overall power consumption of the system. One low-cost method is to use a capacitor to derive an AC current from the AC power source, then to rectify and voltage-limit the resulting DC. However this technique consumes about the same power whether or not DC current is taken by the supplied circuits. An alternative is to rectify the AC supply to give high voltage DC then use a transistor as a series regulator to give a low voltage DC supply. This arrangement is very inefficient when DC power is taken, but has very low power consumption if no DC power is drawn. The inefficiency may be acceptable as it applies only for the short starting time and the extra power taken during this period is still a small amount in comparison to the motor power consumption at this time. In the case where the system includes an OLP, another alternative is to rectify (optionally with diode-capacitor voltage multiplication) the voltage across the resistance and use this to power the low voltage circuits. This is low cost because few additional components are required and is effective because the additional power consumption is very small.

We have thus described a motor starting device for an AC induction motor having a main winding and an auxiliary winding, comprising a control circuit, a resistive element and a switch wherein the resistive element, the switch and the auxiliary winding are connected in series with a power source and wherein: the starting device controls the power to the auxiliary winding during a motor starting process; and the control circuit controls the opening and closing of the switch; and the switch is closed to start the motor; and the switch is opened after the motor has started; and the circuit is responsive to a characteristic signal representative of a current or voltage of the motor. Preferably the device includes one or both of an electronic overload protection circuit and a thermostat input for motor control, in particular as described above/later.

Preferably the said characteristic signal represents a motor current and the control circuit causes the switch to open when a subsequent amplitude of the signal is smaller than a preset fraction of an initial amplitude of the signal. Preferably the motor current comprises the main winding current.

Preferably the motor current is the main winding current. Preferably the control circuit controls the on-time for which the switch is closed and the on-time used in one motor starting process is determined by a said characteristic signal in a previous motor starting process.

Preferably the said characteristic signal is a motor current subsequent to opening of the switch and where the on-time used in a subsequent starting process is reduced when the signal amplitude is below a threshold or reduces at a rate faster than a threshold rate.

Preferably the said characteristic signal is a motor voltage subsequent to opening of the switch and where the on-time used in a subsequent starting process is reduced when the signal amplitude is above a threshold or increases at a rate faster than a threshold rate.

We have also described a motor starting device for an AC induction motor having a main winding and an auxiliary winding, comprising a control circuit and a switch wherein the switch and the auxiliary winding are connected in series with a power source wherein: the starting device controls the power to the auxiliary winding during motor running; and the control circuit controls the opening and closing of the switch and the switch is closed to increase the power to the motor; and the circuit is responsive to a characteristic signal representative of a current of the motor.

Preferably the switch is maintained in a closed condition while the signal is above a fraction of a reference value and the reference value is representative of the motor current at an earlier time. Preferably the switch is maintained in a closed condition for a preset maximum period.

We have also described a control device for an AC induction motor comprising two or more windings wherein the control device comprises a switch to control power applied to at least one winding and wherein: the control device is responsive to current in a motor winding; and the control device determines conditions of higher and lower mechanical motor load; and the control device operates a switch to increase power to the motor under conditions of higher motor load and reduces power to the motor under conditions of lower motor load.

Preferably the switch is operated synchronously with an AC supply voltage so the RMS amplitude of a voltage applied via the switch to a motor winding is lower than that of the AC supply. Preferably the switch is controlled to open and close synchronously with an AC supply voltage to apply a voltage to a winding of phase delayed relative to the AC supply. Preferably the switch is operated to connect a winding of the motor to an AC supply voltage substantially continuously for more than one complete cycle of the supply voltage. Preferably the said connection to the AC supply voltage includes a series impedance.

We have also described a motor system comprising an AC induction motor comprising two or more windings and a control device as above wherein: the system is operable in a condition of higher mechanical output power and a condition of lower mechanical output power; and the control device is responsive to the mechanical load on the motor; and the control device applies higher electrical power to the motor in a condition of higher mechanical load and lower electrical power in a condition of lower mechanical load.

Preferably the control device applies power to one winding of the motor in a condition of lower mechanical load and applies power to more than one winding in a condition of higher mechanical load. Preferably the control device applies power to one winding of the motor only in a condition of lower mechanical load and only to another winding in a condition of higher mechanical load. Preferably the control device applies power only to a part or whole of a winding in a condition of lower mechanical load and only to a different part or whole of a winding in a condition of higher mechanical load.

The skilled person will appreciate that the above described sensing, starting, control and boost features may be employed independently of one another if desired.

No doubt many other effective alternatives will occur to the skilled person. It will be understood that the invention is not limited to the described embodiments and encompasses modifications apparent to those skilled in the art lying within the scope of the claims appended hereto.

**Claims**

1. A control system for a refrigerator compressor, the refrigerator compressor comprising an induction motor (3) having a main winding (4) and a starting/boost winding (5), the motor being energised from a single phase of an ac mains power supply (1), the control system comprising:

   an electronic controller (8) having a power supply derived from said ac mains power supply;
   a current/voltage sense signal input (10) coupled to said electronic controller to input a current sense signal dependent on a current drawn by said motor or a voltage induced in a winding of said motor;
   a first controllable switch (17) having a control connection coupled to said electronic controller to control application of power from said ac mains power supply to said main winding;
   a second controllable switch (7) having a control connection coupled to said electronic controller to control application of power from said ac mains power supply to said starting/boost winding; and
   a temperature sense input (42) coupled to said electronic controller to receive a temperature sense signal sensing a temperature of a cooled zone of a refrigerator; and
   wherein said electronic controller is configured to control said first and second controllable switches responsive to both said current/voltage sense signal and said temperature sense signal to control an average energy consumption of said compressor, wherein said average energy consumption is dependent on at least an energy consumption of said motor when running and an energy consumption of said motor when starting; and
   wherein said electronic controller is configured to control an average energy consumption of said motor by controlling a time-averaged number of starts of said compressor.

**2.** A control system as claimed in claim 1 wherein said electronic controller is configured to determine a thermal demand signal dependent on a deviation of said sensed temperature from said target temperature value, and wherein said controller is configured to limit a minimum time for which said motor is running dependent on said thermal demand signal.

**3.** A control system as claimed in any one of claims 1 or 2 wherein said electronic controller is configured to determine an estimate of said average energy consumption and to control said first and second controllable switches responsive to said estimate.

**4.** A control system as claimed in claim 3 wherein said electronic controller is configured to determine said estimate of said average energy consumption from one or more sensed signals including at least said current/voltage sense signal.

**5.** A control system as claimed in claim 3 or 4 wherein said electronic controller is configured to detect a disturbance in a steady state operating condition of said refrigerator, and to control said determination of said estimate of said average energy consumption responsive to said disturbance detection.

**6.** A control system as claimed in any preceding claim wherein said electronic controller is further configured to control said first and second controllable switches responsive to both said current/voltage sense signal and said temperature sense signal to control: i) starting/boost of said compressor; and ii) operation of said compressor to control said temperature of said cooled zone towards a target temperature value.

**7.** A control system as claimed in any preceding claim wherein said electronic controller further comprises a motor condition sense module to detect a fault condition of said motor, and an overload protection module to inhibit application of said ac mains power to said main winding responsive to said motor condition sense module detecting said fault condition; in particular further comprising a motor winding temperature sense input to receive a motor winding temperature sense signal, wherein said fault condition comprises one or more of a locked motor rotor condition, an overtemperature condition and a stall risk condition, and wherein said fault detection is responsive to both said current/voltage sense signal and said motor winding temperature sense signal.

**8.** A control system as claimed in any one of claims 1 to 7 wherein said electronic controller further comprises a motor temperature sense module to sense a temperature of a said winding of said motor, and an overload protection module to inhibit application of said ac mains power to a said winding responsive to said sensed winding temperature exceeding a threshold, in particular wherein said motor temperature sense module is configured to sense a temperature of at least said starting/boost winding, and wherein said electronic controller is configured to inhibit operation of said second controllable switch responsive to said second starting/boost winding temperature exceeding said threshold.

**9.** A control system as claimed in any preceding claim wherein said electronic controller is further configured to determine from said current/voltage sense signal a motor condition dependent on said degree to which said motor is running, and responsive to said determination to perform one or both of:

i) opening of said second controllable switch to disconnect said starting/boost winding responsive to a determination that said motor has started following application of said ac mains power supply to said main winding of said motor; and
ii) closing of said second controllable switch to re-connect said starting/boost winding to said ac mains power supply responsive to a determination that a mechanical output of said motor is to be boosted, until said electronic controller determines that a defined condition of said motor is met.

**10.** A control system as claimed in claim 8, wherein further comprising an impedance coupled in series with said second switch between said ac mains power supply and said starting/boost winding; and/or wherein said electronic controller is configured to sense a phase and/or magnitude of said current/voltage signal relative to said ac mains power supply to determine said degree to which said motor is running.

**11.** A control system as claimed in claim 7 wherein said motor condition sense module is configured to detect said locked motor rotor responsive to sensed motor current; and/or wherein said fault condition comprises a stall risk condition, and wherein said motor condition sense module is configured to detect said stall risk condition responsive to said sensed motor current exceeding a current threshold, and wherein said electronic controller is configured to vary said threshold dependent on said motor winding temperature sense signal, to decrease said current threshold with increasing sensed temperature of a said winding.

12. A control system as claimed in claim 7, wherein said motor condition sense module is configured to estimate a temperature of a said winding of said motor responsive to a signal from said current sense signal input, and wherein said overload protection module is configured to inhibit application of said ac mains power to said main winding responsive to estimated said motor winding temperature exceeding a threshold value; and/or wherein said motor condition sense module is configured to sense a temperature of at least said starting/boost winding.

**Patentansprüche**

1. Steuerungssystem für einen Kühlschrankkompressor, wobei der Kühlschrankkompressor einen Induktionsmotor (3) mit einer Hauptwicklung (4) und einer Start-/Verstärkungswicklung (5) umfasst, wobei der Motor von einer einzelnen Phase einer Wechselstromnetzstromversorgung (1) gespeist wird, wobei das Steuerungssystem umfasst:

   eine elektronische Steuerungseinrichtung (8) mit einer von der Wechselstromnetzstromversorgung abgeleiteten Stromversorgung;
   einen Strom-/Spannungserfassungssignaleingang (10), der mit der elektronischen Steuerungseinrichtung gekoppelt ist, um ein Stromerfassungssignal einzugeben, das von einem durch den Motor gezogenen Strom oder einer in einer Wicklung des Motors induzierten Spannung abhängt;
   einen ersten steuerbaren Schalter (17) mit einer Steuerungsverbindung, die mit der elektronischen Steuerungseinrichtung gekoppelt ist, um das Anlegen von Strom von der Wechselstromnetzstromversorgung an die Hauptwicklung zu steuern;
   einen zweiten steuerbaren Schalter (7) mit einer Steuerungsverbindung, die mit der elektronischen Steuerungseinrichtung gekoppelt ist, um das Anlegen von Strom von der Wechselstromnetzstromversorgung an die Start-/Verstärkungswicklung zu steuern; und
   einen Temperaturerfassungseingang (42), der mit der elektronischen Steuerungseinrichtung gekoppelt ist, um ein Temperaturerfassungssignal zu empfangen, das eine Temperatur einer gekühlten Zone eines Kühlschranks erfasst; und
   wobei die elektronische Steuerungseinrichtung dafür konfiguriert ist, den ersten und den zweiten steuerbaren Schalter als Reaktion sowohl auf das Strom/Spannungserfassungssignal als auch auf das Temperaturerfassungssignal zu steuern, um einen durchschnittlichen Energieverbrauch des Kompressors zu steuern, wobei der durchschnittliche Energieverbrauch mindestens von einem Energieverbrauch des Motors in Betrieb und einem Energieverbrauch des Motors beim Starten abhängig ist; und
   wobei die elektronische Steuerungseinrichtung dafür konfiguriert ist, einen durchschnittlichen Energieverbrauch des Motors durch Steuern einer zeitlich gemittelten Anzahl von Starts des Kompressors zu steuern.

2. Steuerungssystem nach Anspruch 1, wobei die elektronische Steuerungseinrichtung dafür konfiguriert ist, ein thermisches Anforderungssignal zu bestimmen, das von einer Abweichung der erfassten Temperatur von dem Zieltemperaturwert abhängt, und wobei die Steuerungseinrichtung dafür konfiguriert ist, eine minimale Zeit, während der der Motor läuft, in Abhängigkeit von dem thermischen Anforderungssignal zu begrenzen.

3. Steuerungssystem nach einem der Ansprüche 1 oder 2, wobei die elektronische Steuerungseinrichtung dafür konfiguriert ist, einen Schätzwert des durchschnittlichen Energieverbrauchs zu bestimmen und den ersten und den zweiten steuerbaren Schalter als Reaktion auf den Schätzwert zu steuern.

4. Steuerungssystem nach Anspruch 3, wobei die elektronische Steuerungseinrichtung dafür konfiguriert ist, den Schätzwert des durchschnittlichen Energieverbrauchs aus einem oder mehreren erfassten Signalen zu bestimmen, die mindestens das Strom-/Spannungserfassungssignal einschließen.

5. Steuerungssystem nach Anspruch 3 oder 4, wobei die elektronische Steuerungseinrichtung dafür konfiguriert ist, eine Störung in einem stetigen Betriebszustand des Kühlschranks zu ermitteln und die Bestimmung des Schätzwerts des durchschnittlichen Energieverbrauchs als Reaktion auf die Störungsermittlung zu steuern.

6. Steuerungssystem nach einem der vorhergehenden Ansprüche, wobei die elektronische Steuerungseinrichtung ferner dafür konfiguriert ist, den ersten und den zweiten steuerbaren Schalter als Reaktion sowohl auf das Strom-/Spannungserfassungssignal als auch auf das Temperaturerfassungssignal zu steuern, um i) das Starten/Verstärken des Kompressors; und ii) den Betrieb des Kompressors zu betätigen, um die Temperatur der gekühlten Zone zu einem Zieltemperaturwert zu steuern.

**7.** Steuerungssystem nach einem der vorhergehenden Ansprüche, wobei die elektronische Steuerungseinrichtung ferner umfasst: ein Motorzustand-Erfassungsmodul, um einen Fehlerzustand des Motors zu ermitteln, und ein Überlastungsschutzmodul, um als Reaktion auf das Ermitteln des Fehlerzustandes durch das Motorzustand-Erfassungsmodul das Anlegen der Wechselstromnetzspannung an die Hauptwicklung zu verhindern; insbesondere ferner einen Motorwicklungstemperatur-Erfassungseingang umfassend, um ein Motorwicklungstemperatur-Erfassungssignal zu empfangen, wobei der Fehlerzustand eines oder mehr von einem Zustand eines blockierten Motorrotors, einem Übertemperaturzustand und einem Blockiergefahrzustand umfasst und wobei die Fehlerermittlung sowohl auf das Strom-/Spannungserfassungssignal als auch auf das Motorwicklungstemperatur-Erfassungssignal reagiert.

**8.** Steuerungssystem nach einem der Ansprüche 1 bis 7, wobei die elektronische Steuerungseinrichtung ferner umfasst: ein Motortemperatur-Erfassungsmodul, um eine Temperatur einer besagten Wicklung des Motors zu erfassen, und ein Überlastungsschutzmodul, um als Reaktion darauf, dass die erfasste Wicklungstemperatur einen Schwellenwert überschreitet, das Anlegen der Wechselstromnetzspannung an die Wicklung zu sperren; insbesondere wobei das Motortemperatur-Erfassungsmodul dafür konfiguriert ist, eine Temperatur mindestens der Start-/Verstärkungswicklung zu erfassen, und wobei die elektronische Steuerungseinrichtung dafür konfiguriert ist, als Reaktion darauf, dass die zweite Start-/Verstärkungswicklungstemperatur den Schwellenwert überschreitet, die Betätigung des zweiten steuerbaren Schalters zu sperren.

**9.** Steuerungssystem nach einem der vorhergehenden Ansprüche, wobei die elektronische Steuerungseinrichtung ferner dafür konfiguriert ist, aus dem Strom/Spannungserfassungssignal einen Motorzustand zu bestimmen, der von dem Grad abhängt, in dem der Motor läuft, und als Reaktion auf die Bestimmung eines oder beides von Folgendem durchzuführen:

i) Öffnen des zweiten steuerbaren Schalters, um die Start-/Verstärkungswicklung zu trennen, und zwar als Reaktion auf eine Bestimmung, dass der Motor nach Anlegen der Wechselstromnetzstromversorgung an die Hauptwicklung des Motors gestartet ist; und

ii) Schließen des zweiten steuerbaren Schalters, um die Start-/Verstärkungswicklung wieder mit der Wechselstromnetzstromversorgung zu verbinden, und zwar als Reaktion auf eine Bestimmung, dass eine mechanische Ausgangsleistung des Motors verstärkt werden soll, bis die elektronische Steuerungseinrichtung bestimmt, dass ein definierter Zustand des Motors erreicht ist.

**10.** Steuerungssystem nach Anspruch 8, ferner eine Impedanz umfassend, die in Reihe mit dem zweiten Schalter zwischen die Wechselstromnetzstromversorgung und die Start-/Verstärkungswicklung gekoppelt ist; und/oder wobei die elektronische Steuerungseinrichtung dafür konfiguriert ist, eine Phase und/oder Stärke des Strom-/Spannungssignals relativ zu der Wechselstromnetzstromversorgung zu erfassen, um den Grad zu bestimmen, in dem der Motor läuft.

**11.** Steuerungssystem nach Anspruch 7, wobei das Motorzustand-Erfassungsmodul dafür konfiguriert ist, den blockierten Motorrotor als Reaktion auf den ermittelten Motorstrom zu ermitteln; und/oder wobei der Fehlerzustand einen Blockiergefahrzustand umfasst, und wobei das Motorzustand-Erfassungsmodul dafür konfiguriert ist, als Reaktion darauf, dass der erfasste Motorstrom einen Stromschwellenwert überschreitet, den Blockiergefahrzustand zu ermitteln, und wobei die elektronische Steuerungseinrichtung dafür konfiguriert ist, den Schwellenwert in Abhängigkeit von dem Motorwicklungstemperatur-Erfassungssignal zu variieren, um den Stromschwellenwert mit steigender erfasster Temperatur einer Wicklung zu verringern.

**12.** Steuerungssystem nach Anspruch 7, wobei das Motorzustand-Erfassungsmodul dafür konfiguriert ist, eine Temperatur einer Wicklung des Motors als Reaktion auf ein Signal von dem Stromerfassungssignaleingang abzuschätzen, und wobei das Überlastungsschutzmodul dafür konfiguriert ist, als Reaktion darauf, dass die geschätzte Motorwicklungstemperatur einen Schwellenwert überschreitet, das Anlegen der Wechselstromnetzspannung an die Hauptwicklung zu verhindern; und/oder wobei das Motorzustand-Erfassungsmodul dafür konfiguriert ist, eine Temperatur mindestens der Start-/Verstärkungswicklung zu erfassen.

**Revendications**

1. Système de commande pour un compresseur de réfrigérateur, le compresseur de réfrigérateur comprenant un moteur à induction (3) présentant un enroulement principal (4) et un enroulement de démarrage/survoltage (5), le moteur étant alimenté à partir d'une phase unique d'une alimentation secteur en courant alternatif (1), le système de commande comprenant :

   un contrôleur électronique (8) présentant une alimentation électrique dérivée de ladite alimentation secteur en courant alternatif ;
   une entrée de signal de détection de courant/tension (10) couplée audit contrôleur électronique pour appliquer en entrée un signal de détection de courant dépendant d'un courant tiré par ledit moteur ou d'une tension induite dans un enroulement dudit moteur ;
   un premier commutateur commandable (17) présentant une connexion de commande couplée audit contrôleur électronique pour commander une application de puissance de ladite alimentation secteur en courant alternatif audit enroulement principal ;
   un second commutateur commandable (7) présentant une connexion de commande couplée audit contrôleur électronique pour commander une application de puissance de ladite alimentation secteur en courant alternatif audit enroulement de démarrage/survoltage ; et
   une entrée de détection de température (42) couplée audit contrôleur électronique pour recevoir un signal de détection de température détectant une température d'une zone refroidie d'un réfrigérateur ; et
   dans lequel ledit contrôleur électronique est configuré pour commander lesdits premier et second commutateurs commandables en réponse, à la fois, audit signal de détection de courant/tension et audit signal de détection de température pour commander une consommation d'énergie moyenne dudit compresseur, dans lequel ladite consommation d'énergie moyenne est fonction d'au moins une consommation d'énergie dudit moteur en fonctionnement, et d'une consommation d'énergie dudit moteur au démarrage ; et
   dans lequel ledit contrôleur électronique est configuré pour commander une consommation d'énergie moyenne dudit moteur en commandant un nombre moyenné dans le temps de démarrages dudit compresseur.

2. Système de commande selon la revendication 1, dans lequel ledit contrôleur électronique est configuré pour déterminer un signal de demande thermique dépendant d'un écart de ladite température détectée par rapport à ladite valeur de température cible, et dans lequel ledit contrôleur est configuré pour limiter une durée minimale pendant laquelle ledit moteur fonctionne en fonction dudit signal de demande thermique.

3. Système de commande selon l'une quelconque des revendications 1 et 2, dans lequel ledit contrôleur électronique est configuré pour déterminer une estimation de ladite consommation d'énergie moyenne et commander lesdits premier et second commutateurs commandables en réponse à ladite estimation.

4. Système de commande selon la revendication 3, dans lequel ledit contrôleur électronique est configuré pour déterminer ladite estimation de ladite consommation d'énergie moyenne à partir d'un ou plusieurs signaux détectés incluant au moins ledit signal de détection de courant/tension.

5. Système de commande selon la revendication 3 ou 4, dans lequel ledit contrôleur électronique est configuré pour détecter une perturbation dans une condition de fonctionnement d'état stable dudit réfrigérateur, et commander ladite détermination de ladite estimation de ladite consommation d'énergie moyenne en réponse à ladite détection de perturbation.

6. Système de commande selon l'une quelconque des revendications précédentes, dans lequel ledit contrôleur électronique est en outre configuré pourcommander lesdits premier et second commutateurs commandables en réponse à la fois audit signal de détection de courant/tension et audit signal de détection de température, pour commander : i) le démarrage/survoltage dudit compresseur ; et ii) le fonctionnement dudit compresseur pour commander ladite température de ladite zone refroidie vers une valeur de température cible.

7. Système de commande selon l'une quelconque des revendications précédentes, dans lequel ledit contrôleur électronique comprend en outre un module de détection d'état de moteur pour détecter un état défectueux dudit moteur, et un module de protection contre les surcharges pour empêcher l'application de ladite alimentation secteur en courant alternatif audit enroulement principal, en réponse à la détection dudit état défectueux par ledit module de détection d'état de moteur ; comprenant en particulier en outre une entrée de détection de température d'enroulement de moteur pour recevoir un signal de détection de température d'enroulement de moteur, dans lequel ledit état défectueux comprend un ou plusieurs parmi un état de rotor de moteur bloqué, un état de surchauffe et un état de risque de calage, et dans lequel ledit état défectueux répond à la fois audit signal de détection de courant/tension et audit signal de détection de température d'enroulement de moteur.

8. Système de commande selon l'une quelconque des revendications 1 à 7, dans lequel ledit contrôleur électronique comprend en outre un module de détection de température de moteur pour détecter une température d'un dit enroulement dudit moteur, et un module de protection contre les surcharges pour empêcher l'application de ladite alimentation secteur en courant alternatif à un dit enroulement, en réponse au dépassement d'un seuil par ladite température d'enroulement détectée, en particulier dans lequel ledit module de détection de température de moteur est configuré pour détecter une température d'au moins ledit enroulement de démarrage/survoltage, et dans lequel ledit contrôleur électronique est configuré pour empêcher le fonctionnement dudit second commutateur commandable en réponse au dépassement dudit seuil par ladite seconde température d'enroulement de démarrage/survoltage.

9. Système de commande selon l'une quelconque des revendications précédentes, dans lequel ledit contrôleur électronique est en outre configuré pour déterminer, à partir dudit signal de détection de courant/tension, un état de moteur dépendant dudit degré de fonctionnement dudit moteur, et en réponse à ladite étape de détermination de mise en oeuvre d'une étape ou des deux étapes consistant à :

   i) ouvrir ledit second commutateur commandable pour déconnecter ledit enroulement de démarrage/survoltage en réponse à une détermination selon laquelle ledit moteur a démarré suite à l'application de ladite alimentation secteur en courant alternatif audit enroulement principal dudit moteur ; et
   ii) fermer ledit second commutateur commandable pour reconnecter ledit enroulement de démarrage/survoltage à ladite alimentation secteur en courant alternatif, en réponse à une détermination selon laquelle une sortie mécanique dudit moteur doit être amplifiée, jusqu'à ce que ledit contrôleur électronique détermine qu'un état défini dudit moteur est satisfait.

10. Système de commande selon la revendication 8, comprenant en outre une impédance couplée en série avec ledit second commutateur entre ladite alimentation secteur en courant alternatif et ledit enroulement de démarrage/survoltage ; et/ou dans lequel ledit contrôleur électronique est configuré pour détecter une phase et/ou une amplitude dudit signal de courant/tension par rapport à ladite alimentation secteur en courant alternatif, pour déterminer ledit degré de fonctionnement dudit moteur.

11. Système de commande selon la revendication 7, dans lequel ledit module de détection d'état de moteur est configuré pour détecter ledit rotor de moteur bloqué en réponse à un courant de moteur détecté ; et/ou dans lequel ledit état défectueux comprend un état de risque de calage, et dans lequel ledit module de détection d'état de moteur est configuré pour détecter ledit état de risque de calage en réponse au dépassement d'un seuil de courant par ledit courant de moteur détecté, et dans lequel ledit contrôleur électronique est configuré pour faire varier ledit seuil en fonction dudit signal de détection de température d'enroulement de moteur, pour diminuer ledit seuil de courant avec l'augmentation de la température détectée d'un dit enroulement.

12. Système de commande selon la revendication 7, dans lequel ledit module de détection d'état de moteur est configuré pour estimer une température d'un dit enroulement dudit moteur en réponse à un signal en provenance de ladite entrée de signal de détection de courant, et dans lequel ledit module de protection contre les surcharges est configuré pour empêcher l'application de ladite alimentation secteur en courant alternatif audit enroulement principal, en réponse au dépassement d'une valeur de seuil par ladite température d'enroulement de moteur estimée ; et/ou dans lequel ledit module de détection d'état de moteur est configuré pour détecter une température d'au moins ledit enroulement de démarrage/survoltage.

AC Supply
Voltage

Motor
Speed

PTC
Temperature

Auxiliary
winding
current

Main
winding
current

Main
winding
phase

Lagging

In-phase

A        B        C   D        E

**Fig. 1**

**Fig. 2**

Auxiliary
winding
current

Conventional

"Early"

Main
winding
current

Conventional

"Early"

A          B F                    E

**Fig. 3**

2

3

4

Main

Auxiliary

5

1

12

8

10

9

11

6

7

**Fig. 4**

Fig. 5

Fig. 6

```
┌─────────────────────┐
│   Power-on reset     │
└──────────┬──────────┘
           ▼
┌─────────────────────┐
│  Synchronise timer to│
│     Mains cycle      │
└──────────┬──────────┘
           ▼
┌─────────────────────┐
│    Measure and       │
│  store Main current  │
└──────────┬──────────┘
           ▼
┌─────────────────────┐
│     Turn on          │
│  Auxiliary switch    │
└──────────┬──────────┘
           ▼
┌─────────────────────┐
│     Start            │
│    on-timer          │
└──────────┬──────────┘
           ▼
┌─────────────────────┐
│    Wait until        │
│ on-timer > minimum   │
│    on-time           │
└──────────┬──────────┘
           ▼
┌─────────────────────┐
│   Measure Main       │
│  winding current     │
└──────────┬──────────┘
           ▼
        Main current
            <                    Y
  Initial current x Kfactor?  ──────┐
            │ N                     │
            ▼                       │
        on-timer                    │
            >                  Y    │
     Maximum on-time?  ─────────────┤
            │ N                     │
            └──── (loop back)       │
                                    ▼
                        ┌─────────────────────┐
                        │    Turn off          │
                        │  Auxiliary switch    │
                        └──────────┬──────────┘
                                   ▼
                        ┌─────────────────────┐
                        │     Wait             │
                        │(sleep in low power mode)│
                        └─────────────────────┘
```

**Fig 7**

30

Initial
acquisition

Average

Motor current

Fast
tracking

Slow
tracking

**Fig 8**

Voltage

Current

Positive
Current
sampling
times

Negative
Current
sampling
times

**Fig 9**

**Fig. 10**

**Fig. 11**

Supply
Voltage

Main
Winding
Current

**Fig. 12**

**Fig. 13**

Fig. 14

30

34

33

32

31

**Fig 15a**

35

36

34

35

37

31

36

**Fig 15b**

34

35

37

36

**Fig 15c**

**Fig 15d**

a)

Ton     Toff

On

Off

Tcycle

b)

On

Off

c)

Ton(min)

On

Off

**Fig. 16**

Duration

Tcycle

Ton

Ton(min)

0

0     Dth            Max   Demand

**Fig. 17**

**Fig. 18**

**Fig. 19**

**Fig. 20**

**REFERENCES CITED IN THE DESCRIPTION**

**Patent documents cited in the description**

- US 5808441 A
- EP 1494346 A
- GB 2120877 A
- DE 10062940
- EP O820621 A
- US 2768342 A